(19) Europäisches Patentamt / European Patent Office / Office européen des brevets

(11) **EP 4 422 288 A1**

(12) **EUROPEAN PATENT APPLICATION**

(43) Date of publication:
**28.08.2024** Bulletin 2024/35

(21) Application number: **24159984.4**

(22) Date of filing: **27.02.2024**

(51) International Patent Classification (IPC):
**H04W 52/14** (2009.01)   **H04L 5/00** (2006.01)
**H04W 52/16** (2009.01)   **H04W 52/24** (2009.01)
**H04W 52/40** (2009.01)

(52) Cooperative Patent Classification (CPC):
**H04W 52/146; H04W 52/16; H04W 52/242;**
H04B 17/318; H04L 5/0092; H04W 52/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.02.2023 US 202363448376 P**

(71) Applicant: **Comcast Cable Communications LLC Philadelphia, Pennsylvania 19103 (US)**

(72) Inventors:
• **LANANTE, Leonardo Alisasis**
  **Philadelphia, 19103 (US)**
• **KIM, Jeongki**
  **Philadelphia, 19103 (US)**
• **DINAN, Esmael Hejazi**
  **Philadelphia, 19103 (US)**

(74) Representative: **V.O.**
**P.O. Box 87930**
**2508 DH Den Haag (NL)**

(54) **JOINT TRIGGER FRAME TRANSMISSION**

(57)    An access point may communicate with a wireless device, such as a station. The wireless device may receive a first and second physical layer protocol data unit from one or more access points. A power for transmitting a third physical layer protocol data unit to a first access point, based on the indication of presence or absence of the second physical layer protocol data unit, may be determined by the wireless device.

FIG. 16

**Description**

## CROSS REFERENCE RELATED TO OTHER APPLICATIONS

This application claims the benefit of U.S. Provisional Application No. 63/448,376, filed on February 27, 2023. The above referenced application is hereby incorporated by reference in its entirety.

## BACKGROUND

An access point communicates with wireless devices, such as stations. The access point controls the transmit power of trigger based physical layer protocol data units for each station in a trigger frame. The trigger frame is transmitted jointly by multiple access points. The joint trigger frame is initiated by a master access point using a multi-access point trigger frame.

## SUMMARY

The following summary presents a simplified summary of certain features. The summary is not an extensive overview and is not intended to identify key or critical elements.

An access point may communicate with a wireless device, such as a station. An indication of a presence or absence of overlapping communications (e.g., overlapping physical layer protocol data units) may be provided to a wireless device. For example, a first access point may provide the indication based on receiving a communication from a second access point indicating a (potentially) overlapping communication. Power for transmission of another communication (e.g., another physical layer protocol data unit) to the first access point may be determined by the wireless device based on the indication of a presence or absence of the overlapping communication. For example, transmission power of a trigger-based physical layer protocol data unit may be determined based on an indication of a presence or absence of a second physical layer protocol data unit overlapping with a first physical layer protocol data unit. Transmission power of the trigger-based communication may be based on a previous communication comprising a trigger frame that is not a joint trigger frame, for example, if a communication overlaps with a first communication. The first and second communications may each carry a trigger frame such that they may form a joint trigger frame.

These and other features and advantages are described in greater detail below.

## BRIEF DESCRIPTION OF THE DRAWINGS

Examples of several of the various embodiments of the present disclosure are described herein with reference to the drawings.

FIG. 1 shows example wireless communication networks.
FIG. 2 shows example devices in a communication network.
FIG. 3 shows an example of a multi-AP network.
FIG. 4 shows an example of Enhanced Distributed Channel Access (EDCA) and Coordinated Orthogonal Frequency Division Multiple Access (COFDMA).
FIG. 5 shows an example network that comprises a coordinated AP set.
FIG. 6 shows an example multi-AP operation procedure.
FIG. 7 shows an example multi-AP sounding phase.
FIG. 8 shows an example multi-AP downlink data transmission phase.
FIG. 9 shows an example multi-AP uplink data transmission phase.
FIG. 10 shows an example uplink multi-user transmission procedure.
FIG. 11 show an example uplink multi-user transmission procedure in a multi-AP environment.
FIG. 12 shows an example of a trigger frame format.
FIG. 13 shows an example potential problem that arises in an existing uplink multi-user transmission procedure in a multi-AP environment.
FIG. 14 shows an example uplink multi-user transmission procedure.
FIG. 15 shows an example multiple input multiple output (MIMO) physical layer protocol data unit (PPDU) format.
FIG. 16 shows an example second uplink multi-user transmission procedure.
FIG. 17 shows example trigger frames which may be transmitted jointly.
FIG. 18 shows an example U-SIG field.
FIG. 19 shows another example U-SIG field.
FIG. 20 shows another example trigger frame.

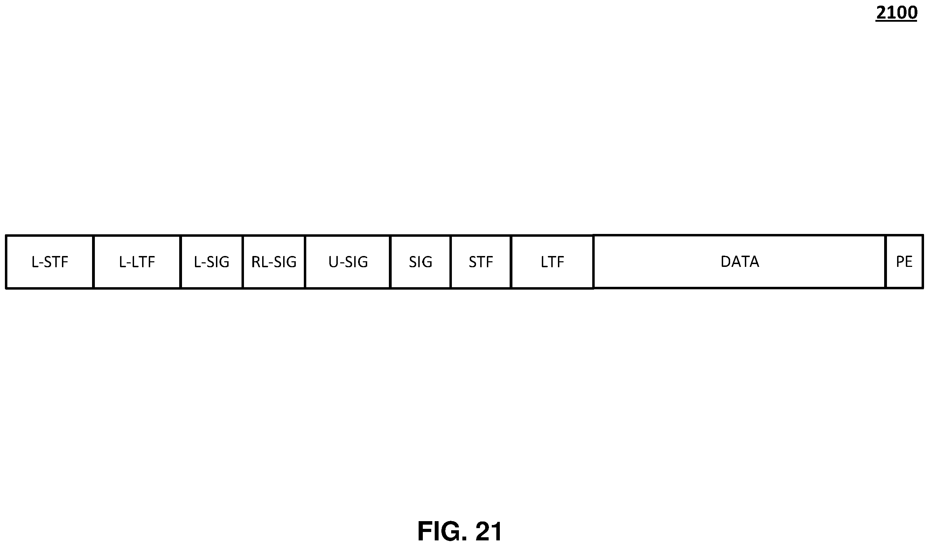

FIG. 21 shows an example single input single output (SISO) PPDU format.
FIG. 22 shows an example third uplink multi-user transmission procedure.
FIG. 23 shows an example process.
FIG. 24 shows an example process.
FIG. 25 shows example elements of a computing device that may be used to implement any of the various devices described herein.

## DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

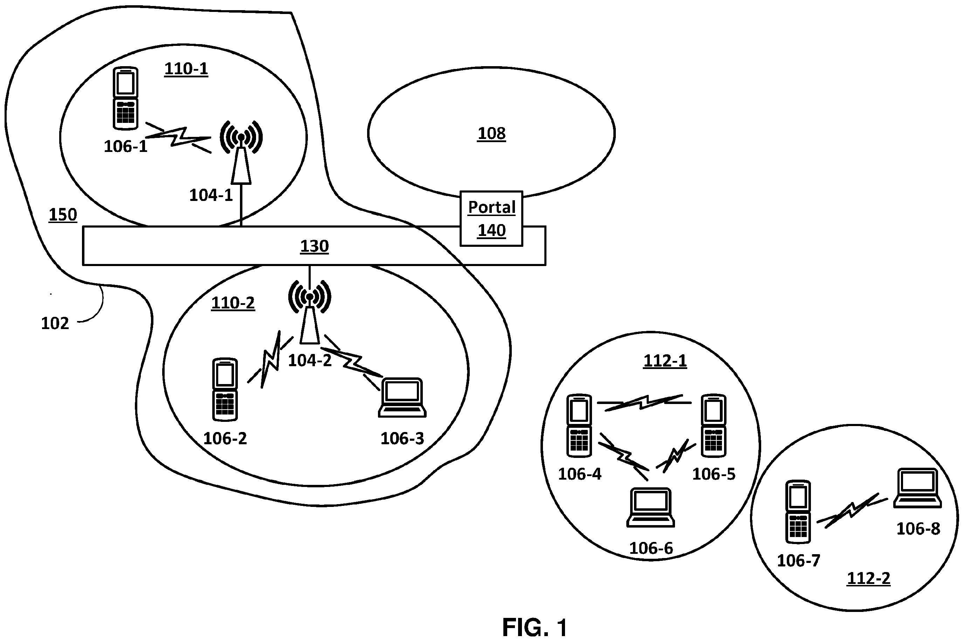

FIG. 1 shows example wireless communication networks. The example wireless communication networks may be a wireless local area network (WLAN) 102. The WLAN 102 may comprise an Institute of Electrical and Electronic Engineers (IEEE) 802.11 infra-structure network, or any other type of communication network. The WLAN 102 may comprise one or more basic service sets (BSSs) 110-1 and 110-2. BSSs 110-1 and 110-2 may each include a set of an access point (AP or AP STA) and at least one station (STA or non-AP STA). For example, BSS 110-1 includes an AP 104-1 and a STA 106-1, and BSS 110-2 includes an AP 104-2 and STAs 106-2 and 106-3. The AP and the at least one STA in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more Aps (e.g., Aps 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks may also, or alternatively, comprise one or more ad-hoc networks and/or independent BSSs (IBSSs). For example, FIG. 1 shows example IBSSs, where STAs 106-4, 106-5 and 106-6 may be configured to form a first IBSS 112-1 and STAs 106-7 and 106-8 may be configured to form a second IBSS 112-2. An ad-hoc network and/or IBSS is a network that includes a plurality of STAs without a centralized communication device, such as an AP. The plurality of STAs may be configured to communicate without requiring the presence of an AP. For example, the plurality of STAs in the IBSS may communicate with each other using peer-to-peer communication (e.g., not via an AP). IBSSs do not include a centralized management entity (e.g., an AP) configured to perform a centralized management. STAs within an IBSS are managed in a distributed manner. STAs forming an IBSS may be fixed and/or mobile. The STAs (e.g., STAs 106-4, 106-5, 106-6, 106-7, 106-8) may or may not be permitted to access the DS 130 to constitute a self-contained network.

A computing device (e.g., wireless device and/or STA) may comprise one or more layers in accordance with the open systems interconnection (OSI) model. For example, STAs may comprise a medium access control (MAC) layer that may be in accordance with a defined standard (e.g., an IEEE 802.11 standard, or any other standard). A physical (PHY) layer interface for a radio medium may include the APs and the non-AP stations (STAs). The STA may comprise one or more of a computing device, a mobile terminal, a wireless device, a wireless transmit/receive unit (WTRU), user equipment (UE), a mobile station (MS), a mobile subscriber unit, and/or a user device. For example, with respect to wireless LAN communications, a device participating in uplink multi-user, multiple input, multiple output (MU-MIMO) and/or uplink orthogonal frequency division multiple access (OFDMA) transmission may be referred to as a STA. STAs may not be limited to only participating in wireless LAN communications, and may perform other types of communications, operations, and/or procedures.

A frequency band to be used for communication may include multiple sub-bands and/or frequency channels. For example, messages (e.g., data packets, physical layer protocol data units (PPDUs)) conforming to the IEEE 802.11 standard (e.g., IEEE 802.11n, 802.11ac, 802.1 1ax, 802. 11be, etc., standards) may be sent (e.g., transmitted) over the 2.4, 5 GHz, and/or 6 GHz bands. Each of the bands may be divided into multiple 20 MHz channels. PPDUs conforming to the IEEE 802.11 standard may be sent, for example, via a physical channel with a minimum bandwidth of 20 MHz. Larger channels may be formed through channel bonding. For example, the PPDUs may be sent via physical channels with bandwidths of 40 MHz, 80 MHz, 160 MHz, 520 MHz, or any other frequency greater than 20 MHz, by bonding together multiple 20 MHz channels.

A PPDU may be a composite structure that may comprise a PHY preamble and a payload in the form of a physical layer convergence protocol (PLCP) service data unit (PSDU). For example, the PSDU may comprise a PLCP preamble, a header, and/or one or more MAC protocol data units (MPDUs). Information indicated by the PHY preamble may be used by a receiving device to decode subsequent data in the PSDU. Preamble fields may be duplicated and sent in each of multiple component channels in a bonded channel, for example, if the PPDU is sent via the bonded channel. The PHY preamble may comprise both a legacy portion (e.g., a legacy preamble) and a non-legacy portion (e.g., a non-legacy preamble). The legacy preamble may be used for packet detection, automatic gain control and channel estimation, etc. The legacy preamble also may generally be used to maintain compatibility with legacy devices. The information provided in, and the format and coding of the non-legacy portion of the preamble may be based on the particular IEEE 802.11 protocol to be used to send the payload.

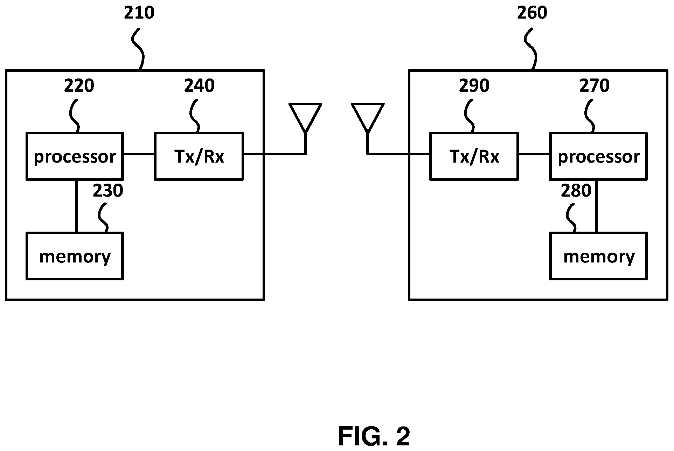

FIG. 2 shows example devices in a communication network. The communication network of FIG. 2 may comprise multiple devices (e.g., communication devices 210 and 260). The communication devices 210 and 260 may perform various functions and procedures as described herein. For example, the communication device 210 may operate as an AP (e.g., an AP STA) and the communication device 260 may operate as a STA (e.g., a non-AP STA). The communication device 210 may operate as a STA (e.g., a non-AP STA) and the communication device 260 may operate as an AP (e.g., an AP STA). Also, or alternatively, the communication device 210 and the communication device 260 may both operate as STAs (e.g., a non-AP STAs) or may both operate as APs (e.g., AP STAs).

The communication device 210 may comprise at least one processor 220, a memory 230, and/or at least one transceiver (e.g., RF unit) 240. The communication device 260 may comprise at least one processor 270, memory 280, and/or at least one transceiver (e.g., RF unit) 290. The transceivers (e.g., transceivers 240, 290) may send/receive radio signals. The transceivers may operate as a PHY layer (e.g., a PHY layer in accordance with an IEEE 802.11 protocol, a 3rd generation partnership project (3GPP) protocol, etc.). The processors (e.g., processors 220, 270) may operate as a PHY layer and/or MAC layer. The processors may be operatively connected to the transceivers, respectively. The communication devices 210 and/or 260 may be a multi-link device (MLD), that is a device capable of operating over multiple links (e.g., as defined by the IEEE 802.1 1be standard amendment). A MLD has multiple PHY layers. The multiple PHY layers may be implemented using one or more of transceivers 240 and/or 290. Processor 220 and/or 270 may implement functions of the PHY layer, the MAC layer, and/or a logical link control (LLC) layer of the corresponding communication devices 210 and/or 260.

The processors and/or the transceivers may comprise an application specific integrated circuit (ASIC), other chipset, logic circuit, and/or data processor. The memory (e.g., memory 230, 280) may include read-only memory (ROM), random access memory (RAM), flash memory, memory card, storage medium and/or other storage unit. The procedures described herein may be executed by modules that perform various functions described herein (e.g., in accordance with instructions stored in the memory). The modules can be stored in the memory and executed by the processor. The memory may be integrated with the processor or may be external to the processor. The memory may be operatively connected to the processor. The processor may implement the functions, processes and/or methods as described herein. For example, the processor 220 may be implemented to perform operations of the AP as described herein. For example, the processor 270 may be implemented to perform operations of the STA as described herein. The memory may store instructions that, when executed by one or more processors, cause the communication device to perform methods as described herein. For example, the memory may be a non-transitory computer-readable medium comprising instructions that, when executed by the one or more processors, cause the one or more processors to perform methods and operations described herein. For example, the memory 230 may store instructions that, when executed by the processor 220, cause the processor 220 to perform operations of the AP as described herein. For example, the memory 280 may store instructions that, when executed by the processor 270, cause the processor 270 to perform operations of the STA as described herein.

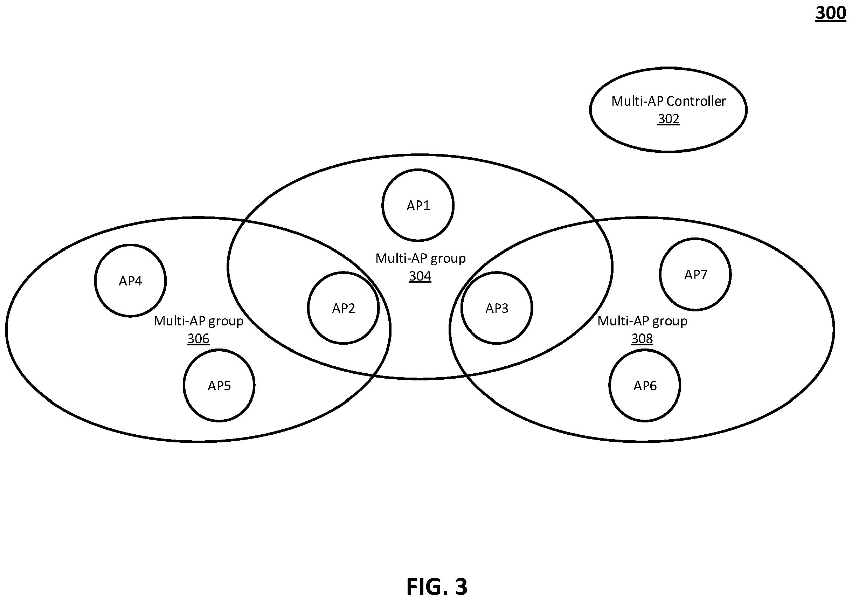

FIG. 3 shows an example multi-AP network 300. Example multi-AP network 300 may be a multi-AP network in accordance with one or more standards, such as a Wi-Fi Alliance standard specification for multi-AP networks and/or any other standard relating to communication with multiple access points. As shown in FIG. 3, multi-AP network 300 may comprise a multi-AP controller 302 and a plurality of multi-AP groups (or multi-AP sets) 304, 306, and 308.

The multi-AP controller 302 may be a logical entity that implements logic for controlling the APs in multi-AP network 300. Multi-AP controller 302 may receive capability information and measurements from the APs and may trigger AP control commands and operations on the APs. Multi-AP controller 302 may also provide onboarding functionality to onboard and provision APs onto multi-AP network 300.

Multi-AP groups 304, 306, and 308 may each comprise a plurality of APs. APs in a multi-AP group may be in communication range of each other and may coordinate their transmissions and/or transmissions from their associated STAs. Coordinated transmissions may involve all or a subset of the APs in a multi-AP group. A multi-AP group may be referred to as an AP candidate set (e.g., APs in a multi-AP group may be considered candidates for a coordinated transmission initiated by an AP). The APs in a multi-AP group may not be required to have the same primary channel. As used herein, the primary channel for an AP may refer to a default channel that the AP monitors for management frames and/or uses to transmit beacon frames. For a STA associated with an AP, the primary channel may refer to the primary channel of the AP, which may be advertised through the AP's beacon frames.

A multi-AP group may be established by a coordinator AP in a multi-AP setup phase prior to any multi-AP coordination. APs of the multi-AP group, other than the coordinator AP, may be referred to as the coordinated APs. A coordinator AP may establish one or more multi-AP groups. A coordinated AP may likewise be a member of multiple multi-AP groups. A coordinator AP of a multi-AP group may be a coordinated AP of another multi-AP group, and vice versa. A multi-AP group may be established by a network administrator manually by configuring APs as part of the multi-AP group. A multi-AP group may be established in a distributed manner by APs without a central controller. An AP may advertise its multi-AP capability in a beacon or other management frame (e.g., public action frame), in this case. Other APs that receive the frame with the multi-AP capability information may perform a multi-AP setup with the AP that advertised the multi-AP capability.

One of the APs in a multi-AP group may be designated as a master AP. The designation of the master AP may be done by an AP controller 302 or by the APs of the multi-AP group. The master AP of a multi-AP group may be fixed or may change over time between the APs of the multi-AP group. An AP that is not the master AP of the multi-AP group is known as a slave AP.

APs in a multi-AP group may perform coordinated transmissions together. An aspect of coordination may comprise coordinated transmissions within the multi-AP group. As used herein, a coordinated transmission, also referred to as a multi-AP transmission, may comprise a transmission event in which multiple APs (of a multi-AP group or a multi-AP network) send (e.g., transmit) in a coordinated manner over a time period. Coordinated transmissions may involve simultaneous transmissions of a plurality of APs in a multi-AP group. The time period of simultaneous AP transmission may be a continuous period. The multi-AP transmission may use different transmission techniques, such as Coordinated OFDMA (COFDMA), Coordinated Spatial Reuse (CSR), Joint Transmission or Reception (JT/JR), Coordinated Beamforming (CBF), and CTDMA, or a combination of two or more of the aforementioned or other techniques.

Multi-AP transmissions may be enabled by the AP controller and/or by the master AP of the multi-AP group. The AP controller and/or the master AP may control time and/or frequency sharing in a transmission opportunity (TXOP). If one of the APs (e.g., the master AP) in the multi-AP group obtains a TXOP, for example, the AP controller and/or the master AP may control how time/frequency resources of the TXOP are to be shared with other APs of the multi-AP group. The AP of the multi-AP group that obtains a TXOP becomes the master AP of the multi-AP group. The master AP may then share a portion of its obtained TXOP (which may be the entire TXOP) with one or more other APs of the multi-AP group.

Different multi-AP transmission schemes may be suitable for different use cases in terms of privacy protection, including whether transmitted data may be shared with other BSSs in the multi-AP group. Some multi-AP transmission schemes, such as CSR, CDTMA, coordinated frequency division multiple access (CFDMA), COFDMA, and CBF, enable a master AP to coordinate slave APs by sharing control information among APs, without requiring the sharing of user data among APs. The control information may comprise BSS information of APs, link quality information of channels between each AP and its associated STAs, and information related to resources to be used to achieve multiplexing in power, time, frequency, or special domains for multi-AP transmission. The control information exchanged among a master AP and slave APs may be used for interference avoidance or nulling to avoid or null co-channel interference introduced to neighboring BSSs in a multi-AP network. Interference avoidance or interference nulling requires that data transmissions between an AP and STAs are only within the same BSS. In other words, each AP transmits or receives data frames to or from its associated STAs, while each STA receives or transmits data frames to or from its associating AP.

By contrast, other multi-AP transmission schemes may enable a master AP to coordinate slave APs by sharing both control information and user data among APs in a multi-AP group. Control information may comprise BSS information related to APs and link quality information of channels between each AP and its associated STAs. By having user data exchanged over backhaul, the master AP and slave APs may perform data transmissions jointly to achieve spatial diversity (e.g., using distributed MIMO, for example, joint transmission (JT) for downlink transmissions and joint reception (JR) for uplink transmissions). The data transmissions between APs and STAs may comprise transmissions within the same BSS and/or across different BSSs. In other words, an AP may send (e.g., transmit) and/or receive data frames to and/or from its associated STAs as well STAs associated with other APs participating in multi-AP transmission. Similarly, a STA may send (e.g., transmit) and/or receive data frames to and/or from multiple APs.

Different multi-AP transmission schemes may be suitable for different use cases in terms of signal reception levels at STAs or APs within a multi-AP group. CBF and JT/JR, for example, require that each STA involved in a multi-AP transmission be located within a common area of signal coverage of the APs involved in the multi-AP transmission. Generally, CBF may be suitable when a receiving STA suffers from potential interference from other APs in the multi-AP group. By using channel related information such as channel state information (CSI), channel quality indication (CQI), or compressed beamforming (BF) feedback exchanged among APs, an AP may pre-code a signal to be sent (e.g., transmitted) to form a beam that increases power toward a target STA while reducing the power that interferes with a STA associated with a neighboring AP. Use cases of JT/JR may require a sufficient received signal power at receiving STAs for JT and a sufficient received signal power at receiving APs for JR. By contrast, CSR may perform multi-AP transmission in an interference coordination manner. The received signal power at a STA associated with an AP sending (e.g., transmitting) data may be required to be much higher than the received interference power.

Different multi-AP transmission schemes may require different synchronization levels and may operate with or without a backhaul between a master AP and slave APs in a multi-AP group. CSR may require PPDU-level synchronization, whereas CBF may require symbol-level synchronization. On the other hand, JT/JR may require tight time/frequency/phase-level synchronization as well as a backhaul for data sharing between APs in the multi-AP group.

Different multi-AP transmission schemes may have different complexity levels with regard to coordination between a master AP and slave APs in a multi-AP group. JT/JR may require very high complexity due to both CSI and user data being shared between APs. CBF may require medium complexity due to the sharing of CSI. CFDMA, COFDMA and CTDMA may require medium or relatively low complexity due to the CSI and time/frequency resources to be shared between APs. CSR may require low complexity as the amount of information related to spatial reuse and traffic that needs to be exchanged between APs may be low.

A multi-AP group may adopt a static multi-AP operation including a static multi-AP transmission scheme. A multi-AP network may also be dynamic due to various reasons. A STA may join or leave the multi-AP network, a STA may switch to a power save mode, or an AP or a STA may change its location. Such changes may lead to changes in the conditions underlying the selection of the multi-AP transmission scheme and may cause certain requirements (e.g., synchronization, backhaul, coordination, etc.) for the multi-AP transmission scheme to be lost. This may result in an inferior quality of transmissions in the multi-AP network.

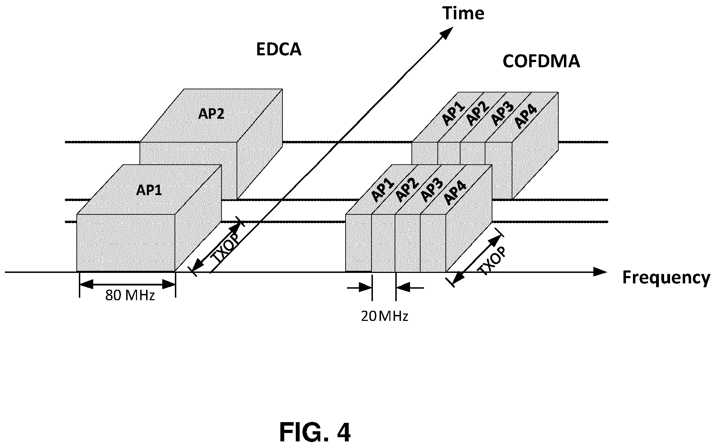

A master AP may share a portion of its TXOP with multiple APs by assigning each of the multiple APs a respective frequency resource (e.g., channel/subchannel) of available frequency resources, for example, such in COFDMA. COFDMA is shown in FIG. 4 as a multi-AP channel access, compared with Enhanced Distributed Channel Access (EDCA). As shown in FIG. 4, in EDCA, channel access by multiple APs (e.g., AP1, AP2) may occur in consecutive time periods (e.g., TXOPs). During a given channel access, the channel (e.g., 80 MHz) in its entirety may be used by a single AP. In contrast, in COFDMA, access by multiple APs (multi-AP channel access) may take place in a same time period (e.g., same TXOP or same portion of a TXOP) over orthogonal frequency resources. As shown in FIG. 4, an 80 MHz channel may be divided into four non-overlapping 20 MHz channels, each assigned to a respective AP of the multiple APs. The multiple APs may send (e.g., transmit) in a coordinated manner, simultaneously in the same time period, to achieve a multi-AP transmission. In the multi-AP transmission, each of the multiple APs may send (e.g., transmit) a PPDU to one or more STAs.

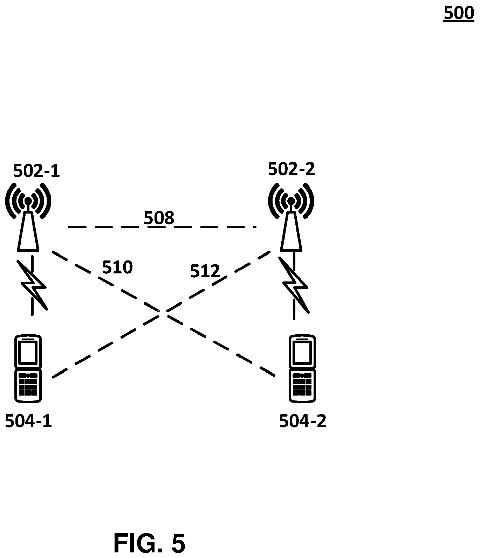

FIG. 5 shows an example network 500 that comprises a coordinated AP set. As shown in FIG. 5, the coordinated AP set may be comprised of two APs - AP 502-1 and AP 502-2. The coordinated AP set may be a subset of an established multi-AP group. At least one STA may be associated with each of APs 502-1 and 502-2. A STA 504-1 may be associated with AP 502-1, and a STA 504-2 may be associated with AP 502-2.

As described herein in FIG. 1, APs 502-1 and 502-2 may belong to the same ESS. In such a case, APs 502-1 and 502-2 may be connected by a DS to support ESS features. In addition, as part of a coordinated AP set, APs 502-1 and 502-2 may be connected by a backhaul. The backhaul is used to share information quickly between APs to support coordinated transmissions. The shared information may be channel state information or data to be sent (e.g., transmitted) to associated STAs. The backhaul may be a wired backhaul or a wireless backhaul. A wired backhaul is preferred for high-capacity information transfer without burdening the main radios of the APs. However, a wired backhaul may require a higher deployment cost and may place greater constraints on AP placement. A wireless backhaul is preferred for its lower deployment cost and flexibility regarding AP placement. However, because a wireless backhaul relies on the main radios of the APs to transfer information, the APs cannot transmit or receive any data while the wireless backhaul is being used.

Typically, one of APs 502-1 and 502-2 may act as a Master AP and the other as a Slave AP. The Master AP is the AP that is the owner of the TXOP. The Master AP may share frequency resources during the TXOP with the Slave AP. If/when there are more than two APs in the coordinated set, a Master AP may share its TXOP with only a subset of the coordinated AP set. The role of the Master AP may change over time. The Master AP role may be assigned to a specific AP for a duration of time. Similarly, the Slave AP role may be chosen by the Master AP dynamically or can be pre-assigned for a duration of time.

The APs may only do certain types of coordinated transmissions, for example, depending on the capability of APs in a coordinated AP set. In FIG. 5, if AP 502-1 supports JT and CSR while AP 502-2 supports CSR and CBF, for example, both APs may only perform CSR as a coordinated transmission scheme. An AP may also prefer to perform single AP transmissions for a duration of time if the benefit of coordinated transmission does not outweigh some disadvantages with coordinated transmission such as reduced flexibility and increased computational power required.

CSR is one type of multi-AP coordination that may be supported by AP 501-1 and AP 502-2 as shown in FIG. 5. Spatial reuse using CSR can be more stable than non-AP coordinated spatial reuse schemes such as OBSS PD-based SR and PSR-based SR. In example 500, APs 502-1 and 502-2 may perform a joint sounding operation in order to measure path loss (PL) on paths of network 500. The joint sounding operation may result in the measurement of PL 508 for the path between APs 502-1 and 502-2, path loss 510 for the path between AP 502-1 and STA 504-2, and path loss 512 for the path between AP 502-2 and STA 504-1. The measured path loss information may then be shared between APs 502-1 and 502-2 (e.g., using the backhaul) to allow for simultaneous transmissions by APs 502-1 and 502-2 to their associated STAs 504-1 and 504-2 respectively. Specifically, if/when APs 502-1 and/or 502-2 obtains a TXOP to become the Master AP. The Master AP may then send a CSR announcement frame to the other AP(s). The Master AP may perform a polling operation, before sending the CSR announcement frame, to poll Slave APs regarding packet availability for transmission. If at least one Slave AP responds indicating packet availability, the Master AP may proceed with sending the CSR announcement frame. In the CSR announcement, the Master AP may limit the transmit power of a Slave AP in order to protect its own transmission to its target STA. The Slave AP may similarly protect its own transmission to its target STA by choosing a modulation scheme that enables a high enough Signal to Interference Ratio (SIR) margin to support the interference due to the transmission of the Master AP to its target STA.

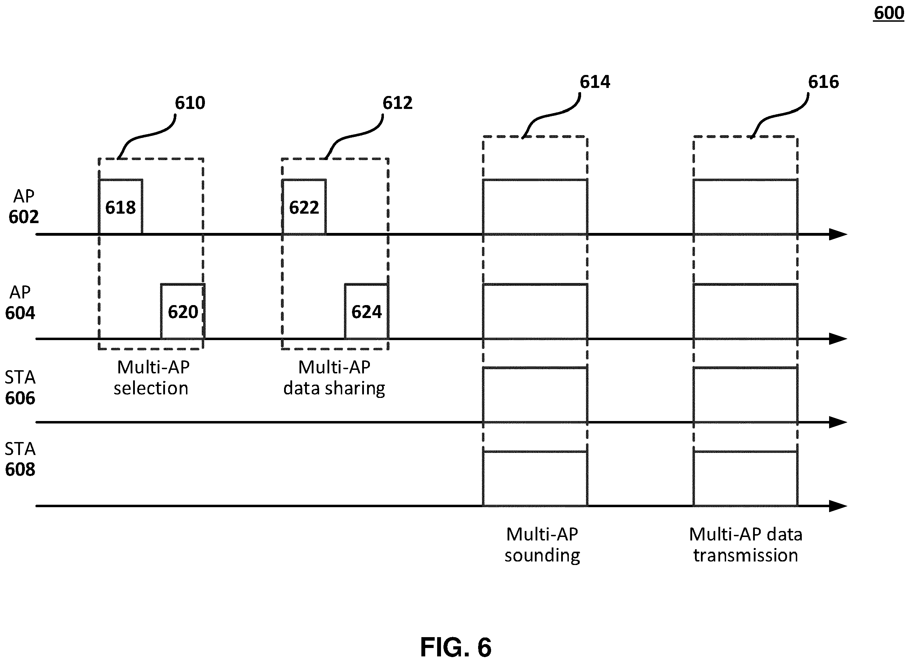

FIG. 6 shows an example 600 of a multi-AP operation procedure. In example 600, the multi-AP operation procedure is shown with respect to a multi-AP network that comprises APs 602 and 604 and STAs 606 and 608. APs 602 and 604 may form a multi-AP group. AP 602 may be the master AP and AP 604 may be a slave AP of the multi-AP group. AP 602 may obtain a TXOP making it the master AP of the multi-AP group. Alternatively, AP 602 may be designated as the master AP by a multi-AP controller.

As shown in FIG. 6, the multi-AP operation procedure may comprise a series of phases in time, each of which may contain a plurality of frame exchanges within the multi-AP network. Specifically, the multi-AP operation procedure may be comprised of a multi-AP selection phase 610, a multi-AP data sharing phase 612, a multi-AP sounding phase 614, and/or a multi-AP data transmission phase 616.

A multi-AP network may carry out a multi-AP operation based on a specific multi-AP transmission scheme. The multi-AP transmission scheme may be chosen by the master AP based on the capabilities of the slave APs in a multi-AP group. Prior to a multi-AP operation, a slave AP may inform the master AP of capability information related to the slave AP, including the capabilities of supporting one or more multi-AP transmission schemes. The slave AP may also inform the master AP of BSS information of the BSS of the slave AP and of link quality information for STAs associated with the slave AP. The master AP may receive information related to all available slave APs. The information related to slave APs may comprise capability information, BSS information, and link quality information. The master AP may determine during a multi-AP selection phase the slave APs to be designated for a multi-AP transmission and a specific multi-AP transmission scheme to be used during the multi-AP transmission, based on the information provided by available slave APs.

The multi-AP selection phase 610 may be comprised of procedures for soliciting, selecting, and/or designating slave AP(s) for a multi-AP group by a master AP. As seen in FIG. 6, the multi-AP selection phase may comprise transmissions of frame 618 from AP 602 and frame 620 from AP 604. AP 602 may send (e.g., transmit) frame 618 to solicit information regarding the buffer status of AP 604. AP 604 may send (e.g., transmit) frame 620 to inform AP 602 of its and its associated STAs buffer status and/or whether it intends to join multi-AP operation. Multi-AP selection phase 610 may also be used to exchange information related to multi-AP operation, including BSS information of APs and link quality information between each AP and its associated STAs, for example. The BSS information of an AP may be comprised of a BSS ID of the BSS of the AP, identifiers and/or capabilities of STAs belonging to the BSS, information regarding sounding capabilities of the STAs, information regarding MIMO capabilities of the AP, etc. Link quality information may comprise received signal strength indicator (RSSI), signal-to-noise ratio (SNR), signal-to-interference-plus-noise-ratio (SINR), channel state information (CSI), channel quality indicator (CQI).

The multi-AP data sharing phase 612 may be comprised of procedures for sharing data frames to be transmitted by APs to associated STAs among the master AP and selected slave AP(s) via direct connections between APs. Phase 612 may be optional for some multi-AP data transmission schemes. Phase 612 may be required for JT/JR as data frames may be exchanged between APs before or after multi-AP data transmission phase 616.

The multi-AP data sharing phase 612 may be performed using a wired backhaul, an in-channel wireless backhaul, or an off-channel wireless backhaul. In some cases, multi-AP data sharing phase 612 may be performed over an in-channel backhaul (e.g., using the same wireless channel used to send/receive data to/from STAs). As shown in FIG. 6, in phase 612, AP 602 may send (e.g., transmit) a frame 622, which may be received by AP 604. Frame 622 may comprise MPDUs that AP 602 wishes to send (e.g., transmit) to associated STAs using a multi-AP operation. Similarly, AP 606 may send (e.g., transmit) a frame 624, which may be received by AP 602. Frame 624 may comprise MPDUs that AP 604 wishes to send (e.g., transmit) to associated STAs using a multi-AP operation.

The multi-AP sounding phase 614 may be comprised of procedures for multi-AP channel sounding, including channel estimation and feedback of channel estimates among the master AP, candidate slave AP(s), and associated STAs. Phase 614 may be optional for some multi-AP transmission schemes, such as COFDMA, CDTMA, and CSR. Phase 614 may be performed by the master AP to aid in resource unit allocation when orchestrating a COFDMA transmission.

The multi-AP data transmission phase 616 may comprise exchange of data frames between the master AP, slave AP(s), and their associated STAs based on multi-AP transmission scheme(s) determined by the master AP. Depending on the multi-AP transmission scheme(s) to be used, phase 616 may be comprised of optional synchronization between APs of the multi-AP group, before exchange of data frames between APs and STAs within the multi-AP group.

The order of phases 610, 612, 614 and 616 may be different than shown in FIG. 6. In COFDMA, phase 616 may occur immediately after phase 610, whereas, in JT/JR, phase 612 may occur after phase 610. Further, as mentioned herein, some phases may be optional and may or may not be present. Phase 614 may not be required for COFDMA but may be required for JT/JR.

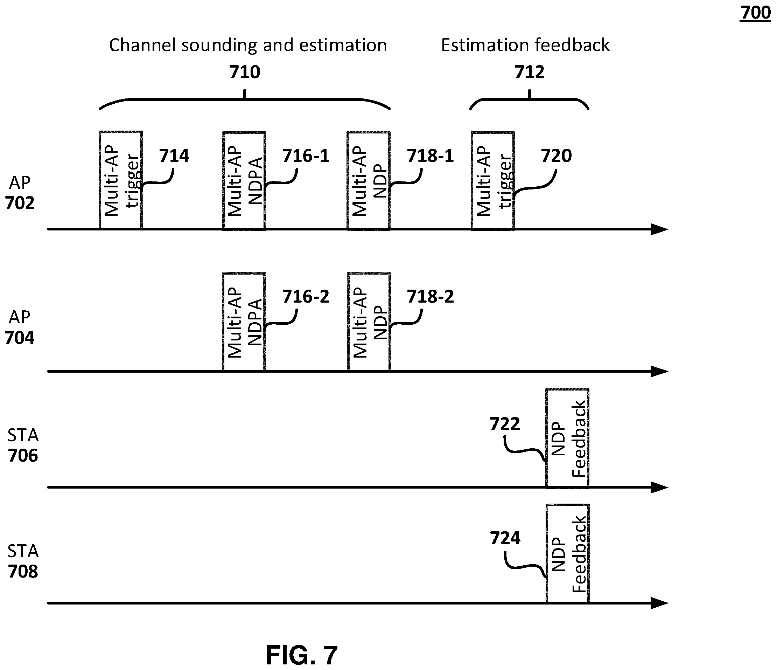

FIG. 7 shows an example 700 of a multi-AP sounding phase. Multi-AP sounding phase 700 may be an example of multi-AP sounding phase 614. As shown in FIG. 7, example 700 may comprise a master AP 702 and a slave AP 704 of a multi-AP group. Example 700 may further include a STA 706 associated with AP 702 and a STA 708 associated with AP 704.

As shown in FIG. 7, multi-AP sounding phase 700 may comprise frame exchanges to allow AP 702 (the master AP) to acquire channel state information (CSI) of channels in the multi-AP group. Phase 700 may be comprised of a first subphase 710 and a second subphase 712.

During the first subphase 710, APs may initiate channel sounding and STAs may estimate channel state information (CSI). AP 702 may transmit a frame 714 to AP 704 (the slave AP) to trigger multi-AP sounding. Frame 714 may comprise a multi-AP trigger frame. Subsequently, APs 702 and 704 may send (e.g., transmit) respectively announcement frames 716-1 and 716-2 to their respective associated STAs 706 and 708 to announce the transmission of sounding frames. Frames 716-1 and 716-2 may comprise multi-AP null data packet announcement (NDPA) frames. Frames 716-1 and 716-2 may be sent (e.g., transmitted) simultaneously. Next, APs 702 and 704 may send (e.g., transmit) respectively frames 718-1 and 718-2 to STAs 706 and 708 respectively. Frames 718-1 and 718-2 may comprise multi-AP null data packet (NDP) frames. STAs 706 and 708 receive frames 718-1 and 718-2 respectively and perform channel estimation of the channels from AP 702 to STA 706 and from AP 704 to STA 708, respectively.

During the second subphase 712, APs may initiate a procedure for STAs to feed back channel estimates to the APs. AP 702 may send (e.g., transmit) a frame 720 to trigger STAs 706 and 708 to send (e.g., transmit) their channel estimates to APs 702 and 704 respectively. Frame 720 may comprise a multi-AP trigger frame. STAs 706 and 708 may send (e.g., transmit) respectively frames 722 and 724 including feedback of channel estimates to APs 702 and 704 respectively. Frames 722 and 724 may comprise NDP feedback frames. The feedback of channel estimates may comprise NDP feedback, CSI-related information, a beamforming report (BFR), or a channel quality indication (CQI) report.

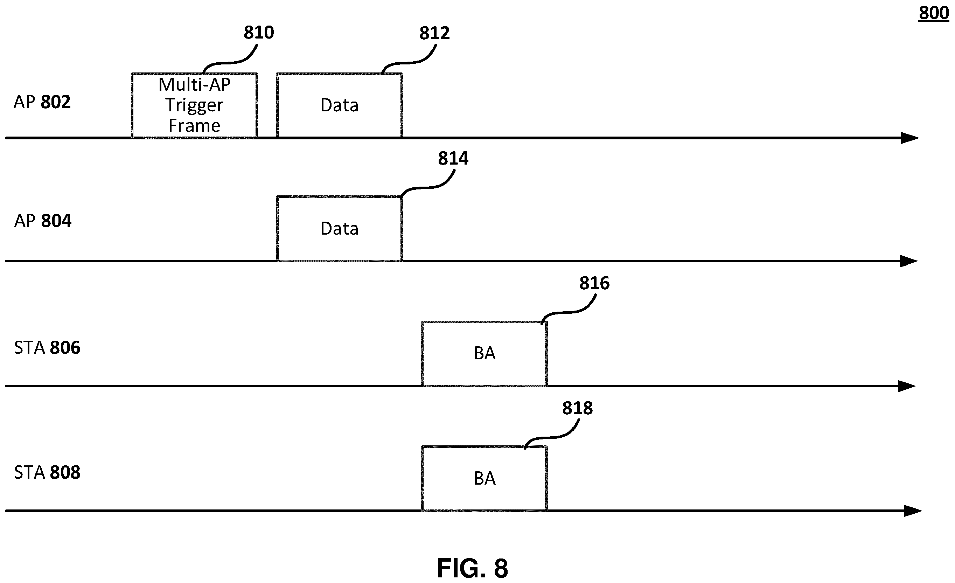

FIG. 8 shows an example 800 of a multi-AP downlink data transmission phase. Multi-AP downlink data transmission phase 800 may be an example of multi-AP data transmission phase 616. As shown in FIG. 8, example 800 may comprise a master AP 802 and a slave AP 804 of a multi-AP group. Example 800 may further comprise a STA 806 associated with AP 802, and a STA 808 associated with AP 804.

As shown in FIG. 8, multi-AP downlink data transmission phase 800 may comprise frame exchanges to enable master AP 802 to coordinate with slave AP 804 to perform specific multi-AP transmission schemes with their associated STAs 804 and 814 respectively. The multi-AP transmission schemes may comprise COFDMA, CTDMA, CSR, CBF, JT/JR, or a combination of two or more of the aforementioned schemes.

As shown in FIG. 8, a master AP 802 may begin phase 800 by sending (e.g., transmitting) a frame 810 to AP 804. Frame 810 may be comprised of information related to AP 804 (e.g., an identifier of AP 804), synchronization information, information related to a specific multi-AP transmission scheme to be used, and/or information related to a resource unit (RU) for use by AP 804 to acknowledge frame 810. Frame 810 may comprise a control frame. Frame 810 may comprise a multi-AP trigger frame.

A slave AP 804 may receive frame 810 and may use the synchronization information to synchronize with master AP 802. APs 802 and 804 may perform data transmission to their associated STAs 806 and 808 respectively. Specifically, AP 802 may send (e.g., transmit) a data frame 812 to its associated STA 806, and AP 804 may send (e.g., transmit) a data frame 814 to its associated STA 808. Depending on the multi-AP transmission scheme being used, APs 802 and 804 may send (e.g., transmit) frames 812 and 814 respectively to STAs in different BSSs. If the multi-AP transmission scheme is JT/JR, AP 802 may also send (e.g., transmit) frame 812 to STA 808 associated with slave AP 804, and AP 804 may also send (e.g., transmit) frame 814 to STA 808 associated with AP 804. The resources for sending (e.g., transmitting) and receiving frames 812 and 814 may depend on the specific multi-AP transmission scheme adopted.

A STA 806 and a STA 808 may acknowledge frames 812 and 814 respectively. STA 806 may send (e.g., transmit) a frame 816 to AP 802, and STA 808 may send (e.g., transmit) a frame 818 to AP 804. Frames 816 and 818 may comprise block ack (BA) frames. STAs 804 and 814 may also send (e.g., transmit) frames 816 and 818 to APs in different BSSs, if/when required by the used multi-AP transmission scheme. If/when the multi-AP transmission scheme is JT/JR, a STA 806 may also send (e.g., transmit) frame 816 to AP 804, and a STA 808 may also send (e.g., transmit) frame 818 to AP 802. The resources for sending (e.g., transmitting) and receiving frames 816 and 818 may depend on the specific multi-AP transmission scheme adopted.

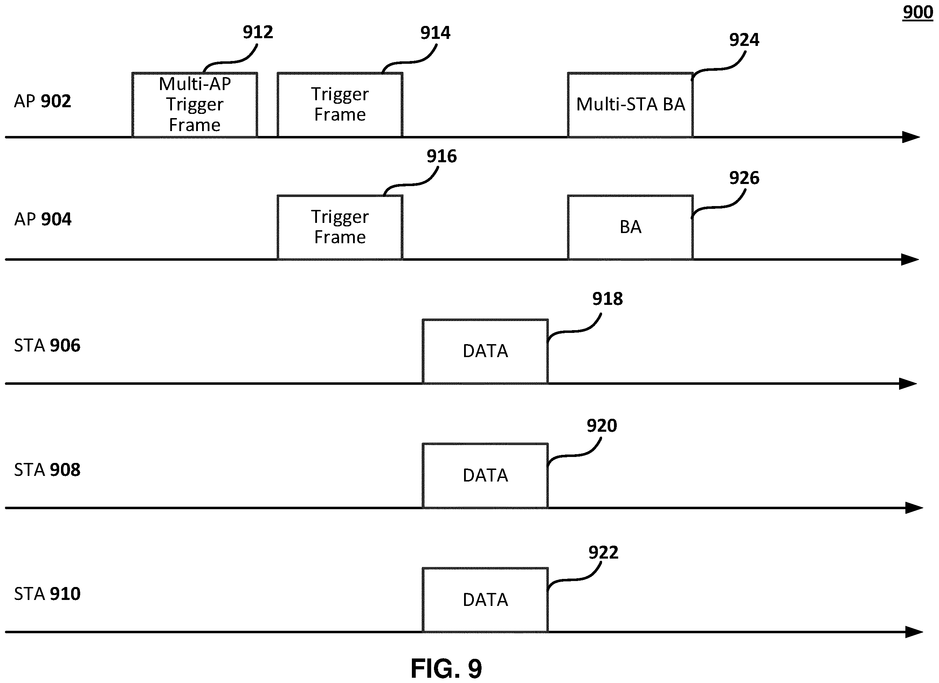

FIG. 9 shows an example 900 of a multi-AP uplink data transmission phase. Multi-AP uplink data transmission phase 900 may be an example of multi-AP data transmission phase 616. As shown in FIG. 9, example 900 may comprise a master AP 902 and a slave AP 904 of a multi-AP group. Example 900 may be further comprised of STAs 906 and 908 associated with AP 902, and a STA 910 associated with AP 904.

As shown in FIG. 9, multi-AP uplink data transmission phase 900 may comprise frame exchanges to enable master AP 902 to coordinate with slave AP 904 to perform specific multi-AP transmission schemes with STAs 906, 908, and 910910. The multi-AP transmission schemes may be comprised of COFDMA, CTDMA, CSR, CBF, JT/JR, or a combination of two or more of the aforementioned schemes.

As shown in FIG. 9, a master AP 902 may begin phase 900 by sending (e.g., transmitting) a frame 912 to an AP 904. Frame 912 may be comprised of information related to AP 904 (e.g., an identifier of AP 904), synchronization information, information related to a specific multi-AP transmission scheme to be used, and/or information related to an RU for use by AP 904 to acknowledge frame 912. Frame 912 may comprise a control frame, for example, frame 912 may comprise a multi-AP trigger frame.

The slave AP 904 may receive frame 912 and may use the synchronization information to synchronize with the master AP 902. Subsequently, APs 902 and 904 may solicit uplink data transmissions from their associated STAs 906, 908 and 910 using trigger frames. Specifically, AP 902 may send (e.g., transmit) a trigger frame 914 to its associated STAs 906 and 908, and AP 904 may send (e.g., transmit) a trigger frame 916 to its associated STA 910. APs 902 and 904 may also transmit frames 914 and 916 respectively to STAs in different BSSs, depending on the multi-AP transmission scheme being used. If/when the multi-AP transmission scheme is JT/JR, AP 902 may also send (e.g., transmit) frame 914 to STA 910 associated with slave AP 904, and AP 904 may also send (e.g., transmit) frame 916 to STAs 906 and 908 associated with AP 902. The resources for sending (e.g., transmitting) and receiving frames 914 and 916 may depend on the specific multi-AP transmission scheme adopted.

The STAs 906 and 908 may respond to frame 914, STA 910 may respond to frame 916. STAs 906 and 908 may send (e.g., transmit) frames 918 and 920 respectively to AP 902, for example, while STA 910 may send (e.g., transmit) a frame 922 to AP 904. Frames 918, 920, and/or 922 may be sent (e.g., transmitted) simultaneously. Frames 918, 920, and 922 may comprise data frames or null data frames. STAs 906, 908, and 910 may also send (e.g., transmit) frames 918, 920, and 922 respectively to APs in different BSSs, if required by the used multi-AP transmission scheme. If/when the multi-AP transmission scheme is JT/JR, STAs 906 and 908 may also send (e.g., transmit) respective frames 918 and 920 to AP 904, and STA 910 may also send (e.g., transmit) frame 922 to AP 902. The resources for sending (e.g., transmitting) and receiving frames 918, 920, and 922 may depend on the specific multi-AP transmission scheme adopted.

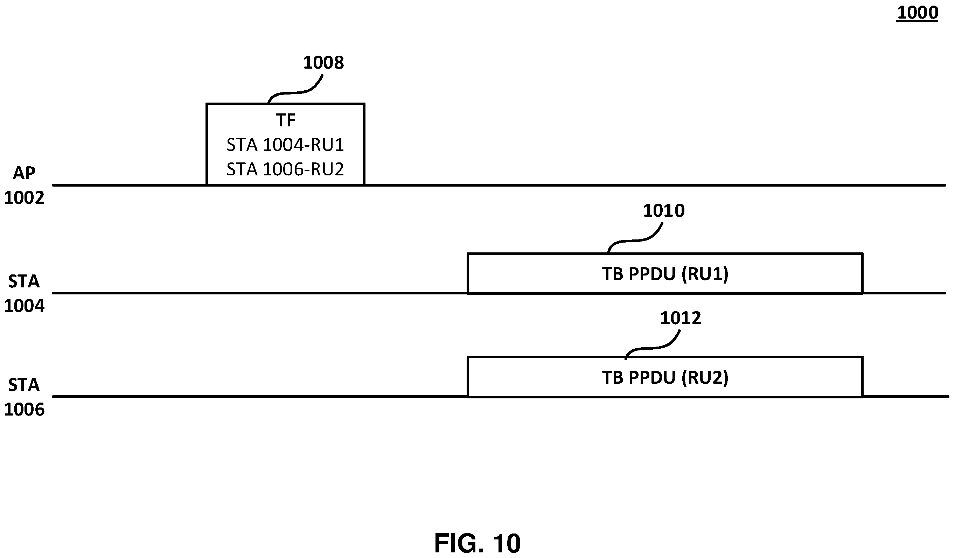

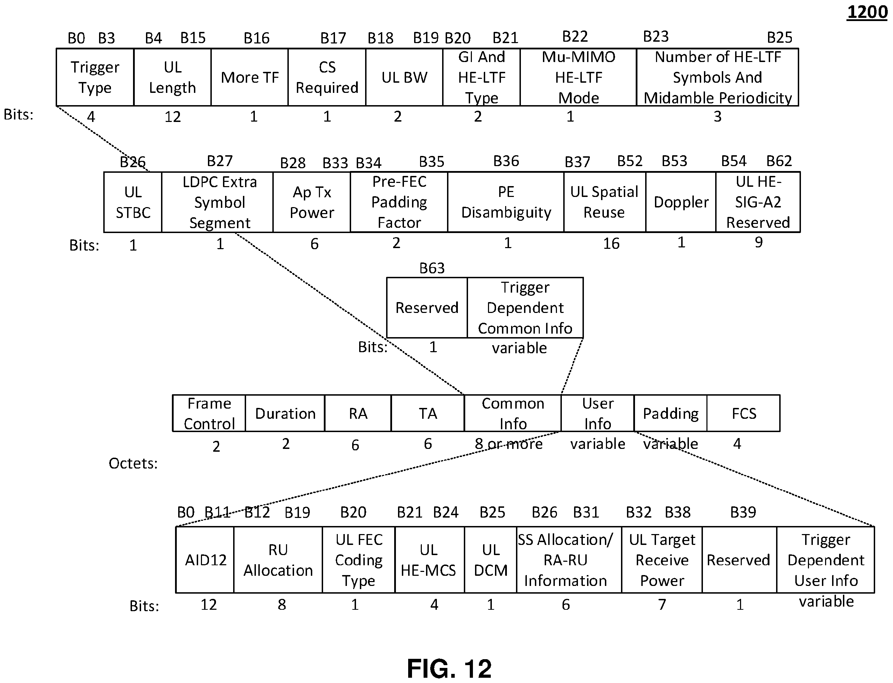

FIG. 10 shows an example 1000 of an uplink multi-user transmission procedure. As shown in FIG. 10, example 1000 comprises an AP 1002 and STAs 1004 and 1006. STAs 1004 and 1006 may be associated with AP 1002. As shown in FIG. 10, the uplink multi-user transmission procedure may comprise AP 1002 sending (e.g., transmitting) a trigger frame 1008, allocating a first uplink RU (RU1) to STA 1004 and a second uplink RU (RU2) to STA 1006. Trigger frame 1008 may have a format similar to that of example trigger frame 1200 shown in FIG. 12. RU1 and RU2 may be associated with same or different frequency resources (e.g., subcarriers) and may be associated with a same time resource. On receiving trigger frame 1008, STAs 1004 and 1006 may send (e.g., transmit) respectively uplink trigger-based (TB) PPDUs 1010 and 1012 to AP 1002. TB PPDU 1010 and 1012 may be sent (e.g., transmitted) via RU1 and RU2 respectively. As RU1 and RU2 may be associated with a same time resource, TB PPDUs 1010 and 1012 may be sent (e.g., transmitted) simultaneously to AP 1002.

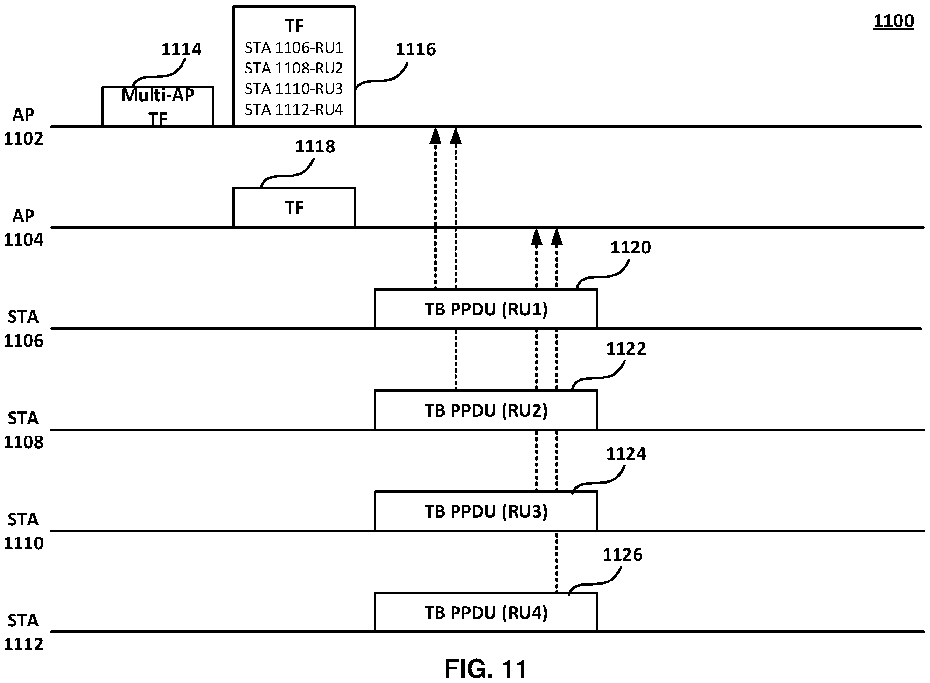

FIG. 11 shows an example 1100 of an uplink multi-user transmission procedure that may be used in a multi-AP environment. As shown in FIG. 11, example 1100 may be comprised of APs 1102 and 1104 and STAs 1106, 1108, 1110, and 1112. APs 1102 and 1104 may be part of a multi-AP group. AP 1102 may be a master AP of the multi-AP group, and AP 1104 may be a slave AP of the multi-AP group. STAs 1106 and 1108 may be associated with AP 1102, and STAs 1110 and 1112 may be associated with AP 1104.

As shown in FIG. 11, the uplink multi-user transmission procedure may begin with AP 1102 sending (e.g., transmitting) a multi-AP trigger frame 1114. AP 1102 may be a holder of a current TXOP and may decide to share the TXOP with AP 1104 to perform a coordinated transmission with AP 1104 (e.g., overlapping in time and frequency) during the TXOP. AP 1102 may be referred to as a sharing AP. Trigger frame 1114 may be configured to inform AP 1104 of the TXOP sharing opportunity. Additionally, trigger 1114 may serve to synchronize AP 1104 with AP 1102 for the coordinated transmission.

The coordinated transmission comprises transmission of overlapping (in time and frequency) trigger frames by the APs 1102 and 1104. Synchronization between APs 1102 and AP 1104 may comprise time synchronization to enable transmission of the trigger frames by APs 1102 and 1104 in a time-overlapping manner. The trigger frames by APs 1102 and 1104 may be sent (e.g., transmitted) a short interframe space (SIFS) after, or in response to, transmission of trigger frame 1114. Synchronization between APs 1102 and 1104 may comprise content synchronization of the overlapping trigger frames by APs 1102 and 1104. The content synchronization of the overlapping trigger frames may be necessary for a STA (associated with AP 1102 or 1104) to successfully receive the trigger frame from its associating AP in the presence of an overlapping trigger frame from another AP. Trigger frame 1114 may comprise a resource allocation for all STAs to be allocated by the overlapping trigger frames (both STAs associated with AP 1102 and STAs associated with AP 1104). The resource allocation is duplicated in both of the overlapping trigger frames by APs 1102 and 1104.

After the transmission of trigger frame 1114 by AP 1102, APs 1102 and 1104 may send (e.g., transmit) trigger frames 1116 and 1118 respectively. Trigger frames 1116 and 1118 may each have a format similar to that of example trigger frame 1200 shown in FIG. 12. Trigger frames 1116 and 1118 may be sent (e.g., transmitted) a SIFS after the transmission of trigger frame 1114. Trigger frames 1116 and 1118 may overlap in both time and frequency. Trigger frames 1116 and 1118 may be duplicate frames. Trigger frames 1116 and 1118 may have duplicate PHY and MAC (includes a data field) portions. Trigger frames 1116 and 1118 may each comprise the same resource allocation. The resource allocation may be announced in trigger frame 1114 sent (e.g., transmitted) by AP 1102. In example 1100, the resource allocation may be comprised of an allocation of a first RU (RU1) to STA 1106, a second RU (RU2) to STA 1108, a third RU (RU3) to STA 1110, and a fourth RU (RU4) to STA 1112. Trigger frames 1116 and 1118 may each be comprised of (in a data field) a respective User Info field for each of STAs 1106, 1108, 1110, and 1112. The respective User Info field indicates the respective RU being allocated to the corresponding STA.

The STAs 1106, 1108, 1110, and 1112 may each receive a superposition signal of trigger frames 1116 and 1118. The time and content synchronization of trigger frames 1116 and 1118 allows each of STAs 1106, 1108, 1110, and 1112 to successfully decode the duplicate trigger frame transmission contained in the superposition signal and to locate its respective allocated RU in the resource allocation carried by the duplicate trigger frame transmission. STAs 1106, 1108, 1110, and 1112 may then send (e.g., transmit) respectively TB PPDUs 1120, 1122, 1124, and 1126 via RU1, RU2, RU3, and RU4, respectively. TB PPDUs 1120, 1122, 1124, and 1126 may each be sent (e.g., transmitted) a SIFS after the transmission of trigger frames 1116 and 1118. As such, TB PPDUs 1120, 1122, 1124, and 1126 may be sent (e.g., transmitted) simultaneously in the uplink.

FIG. 12 shows an example 1200 of a trigger frame format. Trigger frame 1200 may correspond to a basic trigger frame in accordance with one or more standards, such as IEEE 802.11ax standard amendment and/or any other standard relating to trigger frames. Trigger frame 1200 may be used by an AP to allocate resources for and/or solicit one or more TB PPDU transmissions from one or more STAs. Trigger frame 1200 may also carry other information required by a responding STA to transmit a TB PPDU to the AP.

As shown in FIG. 12, trigger frame 1200 comprises a Frame Control field, a Duration field, a receiver address (RA) field, a transmitter address (TA) field, a Common Info field, a User Info field, a Padding field, and an FCS field. The Frame Control field comprises the following subfields (not shown in FIG. 12): protocol version, type, subtype, To DS, From DS, more fragments, retry, power management, more data, protected frame, and +HTC.

The Duration field indicates various contents depending on frame type and subtype and the QoS capabilities of the sending STA. In control frames of the power save poll (PS-Poll) subtype, for example, the Duration field carries an association identifier (AID) of the STA that sent (e.g., transmitted) the frame in the 14 least significant bits (LSB), and the 2 most significant bits (MSB) are both set to 1. In other frames sent by STAs, the Duration field contains a duration value (in microseconds) which is used by a recipient to update a network allocation vector (NAV).

The RA field is the address of the STA that is intended to receive the incoming transmission from the transmitting station. The TA field is the address of the STA sending (e.g., transmitting) trigger frame 1200 if trigger frame 1200 is addressed to STAs that belong to a single BSS. The TA field is the sent (e.g., transmitted) BSSID if the trigger frame 1200 is addressed to STAs from at least two different BSSs of the multiple BSSID set.

The Common Info field specifies a trigger frame type of trigger frame 1200, a transmit power of trigger frame 1200 in dBm (in AP Tx Power field), and several key parameters of a TB PPDU that is sent (e.g., transmitted) by a STA after or in response to trigger frame 1200. The trigger frame type of a trigger frame used by an AP to receive QoS data using UL MU operation is referred to as a basic trigger frame.

The User Info field contains a User Info field per STA addressed in trigger frame 1200. The per STA User Info field comprises, an AID subfield, an RU Allocation subfield, a Spatial Stream (SS) Allocation subfield, an MCS subfield to be used by a STA in a TB PPDU sent (e.g., transmitted) after or in response to trigger frame 1200, an UL Target Receive Power subfield, and a Trigger Dependent User Info subfield. The UL Target Receive Power subfield may indicate a target receive power at the AP of a TB PPDU sent (e.g., transmitted) by the STA. The Trigger Dependent User Info subfield may be used by an AP to specify a preferred access category (AC) per STA. The preferred AC may set the minimum priority AC traffic that can be sent by a participating STA. The AP may determine the list of participating STAs, along with the BW, MCS, RU allocation, SS allocation, Tx power, preferred AC, and maximum duration of the TB PPDU per participating STA.

The Padding field is optionally present in trigger frame 1200 to extend the frame length to give recipient STAs enough time to prepare a response for transmission one SIFS after the frame is received. The Padding field, if present, may be at least two octets in length and may be set to all 1s. The FCS field may be used by a STA to validate a received frame and to interpret certain fields from the MAC headers of a frame.

If/when an AP allocates multiple users for simultaneous uplink transmissions to the AP, the transmit powers of the uplink transmissions may be controlled to avoid a near-far effect problem, in accordance with one or more standards, such as the IEEE 802.11 standard, and/or any other standard relating to the transmit power of uplink transmissions. Indeed, without uplink transmit power control, the uplink transmission signal from a first STA that may be near the AP may overwhelm the AP's radio circuitry and make it harder to receive the uplink transmission signal from a second STA that may be farther from the AP.

The AP may control the transmit power of an uplink transmission (e.g., TB PPDU) by providing an UL target receive power to the STA, in accordance with one or more standards, such as the IEEE 802.11 standard, and/or any other standard relating to the transmit power of uplink transmissions. The UL target receive power represents a target power at which the AP wishes to receive the uplink transmission signal from the STA. The UL target receive power may be provided in the UL Target Receive Power subfield of the User Info field corresponding to the STA in a trigger frame. Additionally, the AP may provide the STA with an indication of the transmit power used by the AP to transmit the trigger frame. The trigger frame transmit power indication may be provided in the AP Tx power subfield of the Common Info field of the trigger frame. The STA may use the trigger frame transmit power indication and the UL target receive power to calculate its transmit power for the uplink transmission to the AP. With reference to example 1000 described above, AP 1002 may provide STA 1004 in trigger frame 1008 an UL target receive power for TB PPDU 1010 and an indication of the transmit power of trigger frame 1008. STA 1004 may estimate a pathloss of the downlink channel from AP 1002 to STA 1004, based on the transmit power of trigger frame 1008 and a measured receive power of trigger frame 1008. Assuming channel reciprocity, STA 1004 may then compute its transmit power for TB PPDU 1010 based on the UL target receive power for TB PPDU 1010 and the estimated pathloss. STA 1004 may use the following equations (1) and/or (2) respectively to estimate the pathloss of the downlink channel from AP 1002 to STA 1004 and to calculate its transmit power for TB PPDU 1010:

$$PL_{DL} = Tx_{pwr}^{AP} - Rx_{pwr} \qquad\qquad (1)$$

$$TX_{pwr}^{STA} = PL_{DL} + TargetRx_{Pwr} \qquad\qquad (2)$$

where $PL_{DL}$ represents the pathloss of the downlink channel from AP 1002 to STA 1004, $Tx_{pwr}^{AP}$ represents the transmit power of trigger frame 1008, $Rx_{pwr}$ represents the measured receive power of trigger frame 1008 at STA 1004, $TargetRx_{Pwr}$ represents the UL target receive power for TB PPDU 1010, and $TX_{pwr}^{STA}$ represents the transmit power for TB PPDU 1010.

Both STAs 1004 and 1006 may perform TB PPDU power control described herein. As such, TB PPDUs 1010 and 1012 may be received by AP 1002 at the UL target receive power(s) indicated by AP 1002 and may both be decoded successfully by AP 1002. APs 1002 and 1004 may have the same UL target receive power for TB PPDUs 1010 and 1012. The UL target receive power for TB PPDUs 1010 and 1012 may be the same, if APs 1002 and 1004 use the same modulation and coding scheme (MCS) for sending (e.g., transmitting) TB PPDUs 1010 and 1012 respectively.

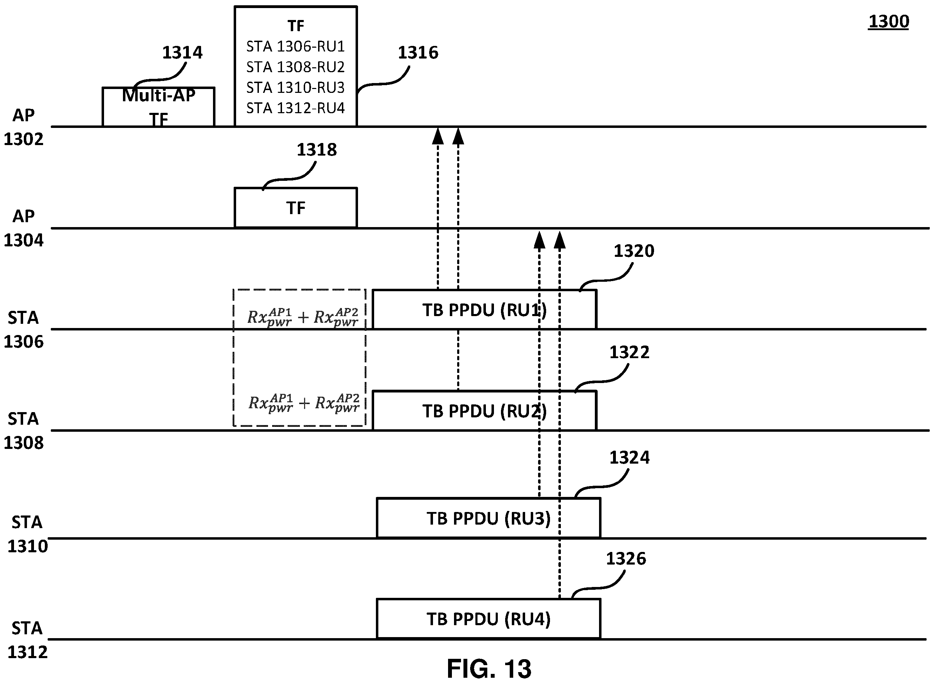

FIG. 13 is an example 1300 that shows a potential problem that arises in the existing uplink multi-user transmission procedure used in a multi-AP environment. As shown in FIG. 13, example 1300 may be comprised of APs 1302 and 1304 and STAs 1306, 1308, 1310, and 1312. APs 1302 and 1304 may be part of a multi-AP group. AP 1302 may be a master AP of the multi-AP group, and AP 1304 may be a slave AP of the multi-AP group. STAs 1306 and 1308 may be associated with AP 1302, and STAs 1310 and 1312 may be associated with AP 1304.

As described herein with reference to example 1100, the uplink multi-user transmission procedure may begin with AP 1302 sending (e.g., transmitting) a multi-AP trigger frame 1314. AP 1302 may be a holder of a current TXOP and may decide to share the TXOP with AP 1304 to perform a coordinated transmission with AP 1304 (e.g., overlapping in time and frequency) during the TXOP. Trigger frame 1314 may be configured to inform AP 1304 of the TXOP sharing opportunity. Additionally, trigger frame 1314 may serve to synchronize AP 1304 with AP 1302 for the coordinated transmission. The coordinated transmission may comprise transmission of overlapping (in time and frequency) trigger frames by APs 1302 and 1304. Synchronization between APs 1302 and AP 1304 may comprise time and content synchronization as described herein with reference to FIG. 11. Trigger frame 1314 may comprise a resource allocation for all STAs being allocated by the overlapping trigger frames (both STAs associated with AP 1302 and STAs associated with AP 1304).

APs 1302 and 1304 may send (e.g., transmit) trigger frames 1316 and 1318 respectively, for example, after the transmission of trigger frame 1314 by AP 1302. Trigger frames 1316 and 1318 may overlap in both time and frequency. Trigger frames 1316 and 1318 may each comprise the same resource allocation. In example 1300, the resource allocation may comprise an allocation of a first RU (RU1) to STA 1306, a second RU (RU2) to STA 1308, a third RU (RU3) to STA 1310, and a fourth RU (RU4) to STA 1312.

STAs 1306, 1308, 1310, and 1312 may each receive a superposition signal of trigger frames 1316 and 1318.

As described herein, the time and content synchronization of trigger frames 1316 and 1318 allows each of STAs 1306, 1308, 1310, and 1312 to successfully decode the duplicate trigger frame transmission contained in the superposition signal and to locate its respective allocated RU in the resource allocation carried by the duplicate trigger frame transmission. However, as STAs 1306, 1308, 1310, and 1312 receive a superposition signal of trigger frames 1316 and 1318, STAs 1306, 1308, 1310, and 1312 may not be able to accurately measure the receive power of the trigger frame sent (e.g., transmitted) by their respective associating APs. STAs 1306 and 1308 may not be able to accurately measure the receive power of trigger frame 1316 sent (e.g., transmitted) by AP 1302. Similarly, STAs 1310 and 1312 may not be able to accurately measure the receive power of trigger frame 1318 transmitted by AP 1304.

STAs 1306, 1308, 1310, and 1312 thus, may not be able to perform (or may perform based on inaccurate measured receive powers) the TB PPDU power control in sending (e.g., transmitting) TB PPDUs 1320, 1322, 1324, and 1326 respectively as described herein. Assuming that STA 1306 is close to AP 1304, STA 1306 may measure a higher receive power of trigger frame 1316 from AP 1302 (due to the presence of overlapping duplicate trigger frame 1318) and may compute a lower transmit power for its TB PDDU 1320. TB PPDU 1320 may thus be received by AP 1302 at a lower level than is necessary to successfully decode TB PDDU 1320. Without proper uplink transmit control, AP 1302 may not be able to receive one or more of TB PPDUs 1320 and 1322 from STAs 1306 and 1308. Similarly, AP 1304 may not be able to receive one or more of TB PPDUs 1324 and 1326 from STAs 1310 and 1312.

In at least some technologies, an access point may control transmit power(s) of trigger based physical layer protocol data units by setting a parameter (e.g., $TargetRx_{Pwr}$) for each station in a trigger frame. Setting the parameter may help to ensure that the station signals arrive at similar receive powers at an access point. Setting the parameter may also allow the stations to conserve power. A trigger frame may be sent (e.g., transmitted) jointly by multiple access points, initiating a multi-access point transmission. A joint trigger frame may be initiated by a master access point using a multi-access point trigger frame. The joint trigger frame may contain one or more fields (e.g., User Info fields) for all stations participating in the multi-access point transmission. The same content may be sent (e.g., transmitted) by all access points which may enable all access points to transmit at the same time.

Problems may arise, for example, if two or more access points send (e.g., transmit) a joint trigger frame, such that the powers of the respective access point transmissions may add up at the receiver stations and prevent the station(s) from determining accurate pathloss from a respective access point. If a station cannot estimate the pathloss from an access point accurately, the station may use a transmit power that may result in an incorrect target receive power at the access point.

As described herein, an indication may be provided in a first PPDU that may indicate the presence or absence of a second PPDU overlapping (e.g., in time and/or frequency) with the first PPDU. The transmit power of the TB PPDU may be determined based on the indication of presence or absence of the second PPDU. If the second PPDU overlaps the first PPDU, the transmit power of the TB PPDU may be based on a previous PPDU comprising a trigger frame that is not a joint trigger frame. The first and second PPDU may each carry a trigger frame, thus forming a joint trigger frame.

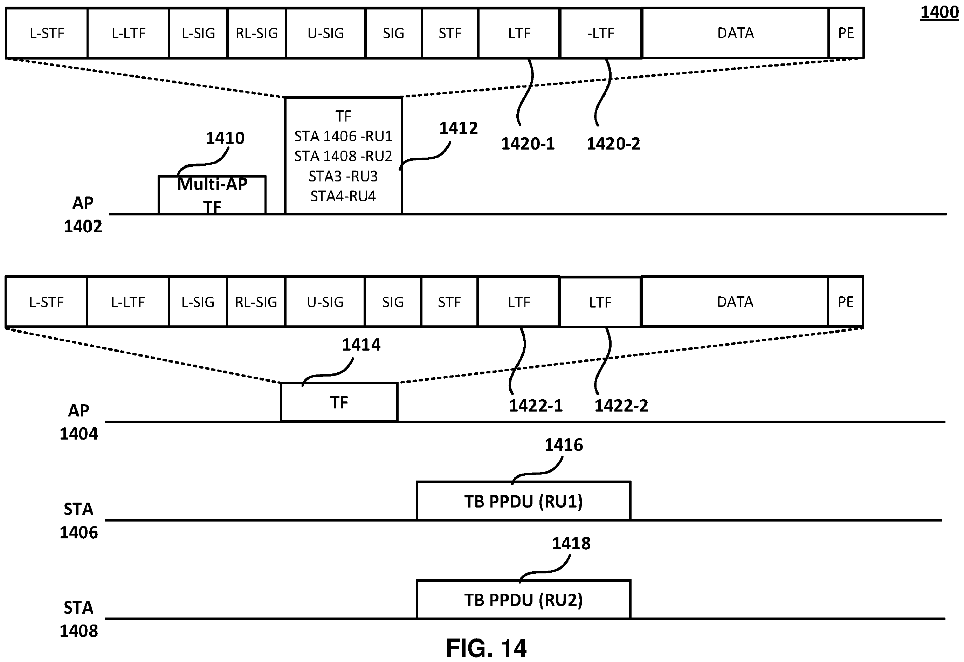

FIG. 14 is an example 1400 that shows an example uplink multi-user transmission procedure. As shown in FIG. 14, example 1400 comprises the APs 1402 and 1404 and the STAs 1406 and 1408. APs 1402 and 1404 may be part of a multi-AP group. AP 1402 may be a master AP of the multi-AP group, and AP 1404 may be a slave AP of the multi-AP group. STAs 1406 and 1408 may be associated with AP 1402. AP 1402 may also have one or more STAs associated with it. For the simplification of presentation, the STAs associated with AP 1404 are not shown in FIG. 14 and are referred to hereinafter (and in FIG. 14) as "STA3" and "STA4."

As shown in FIG. 14, the uplink multi-user transmission procedure may begin with AP 1402 sending (e.g., transmitting) a multi-AP trigger frame 1410. AP 1402 may be a holder of a current TXOP and may decide to share the TXOP with AP 1404 to perform a coordinated transmission with AP 1404 (e.g., overlapping in time and frequency) during the TXOP. AP 1402 may be referred to as a sharing AP. Trigger frame 1410 may be configured to inform AP 1404 of the TXOP sharing opportunity. Additionally, trigger frame 1410 may serve to synchronize AP 1404 with AP 1402 for the coordinated transmission.

The coordinated transmission may comprise transmission of overlapping (in time and frequency) trigger frames by APs 1402 and 1404. Synchronization between APs 1402 and AP 1404 may comprise time synchronization to enable transmission of the trigger frames by APs 1402 and 1404 in a time-overlapping manner. The trigger frames by APs 1402 and 1404 may be sent (e.g., transmitted) a SIFS after transmission of trigger frame 1410. Synchronization between APs 1402 and 1402 may comprise content synchronization of the overlapping trigger frames by APs 1402 and 1404. The content synchronization of the overlapping trigger frames may be necessary for a STA (associated with AP 1402 or 1404) to successfully receive the trigger frame from its associating AP in the presence of an overlapping trigger frame from another AP. Trigger frame 1410 may comprise a resource allocation for all STAs to be allocated by the overlapping trigger frames (both STAs associated with AP 1402 and STAs associated with AP 1404). The resource allocation is duplicated in both of the overlapping trigger frames by APs 1402 and 1404.

APs 1402 and 1404 may send (e.g., transmit) trigger frames 1412 and 1414 respectively, for example, after the transmission of trigger frame 1410 by AP 1402. Trigger frames 1412 and 1414 may be sent (e.g., transmitted) a SIFS after the transmission of trigger frame 1410. Trigger frames 1412 and 1414 may overlap in both time and frequency.

Trigger frames 1412 and 1414 may each comprise a PPDU that comprises one or more of: a non-HT short training field (L-STF), a non-HT long training field (L-LTF), a non-HT signal field (L-SIG), a repeated L-SIG (RL-SIG), a universal signal field (U-SIG), a signal field (SIG) (e.g., Extremely High Throughput (EHT)-SIG or Ultra High Reliability (UHR)-SIG), a short training field (STF) (e.g., EHT-STF or UHR-STF), a long training field (LTF) (e.g., EHT-LTF or UHR-LTF), a data field, and a packet extension (PE) field. The L-STF, L-LTF, L-SIG, RL-SIG, U-SIG, SIG, and STF may comprise the same symbol information and may be sent (e.g., transmitted) in-phase in trigger frames 1412 and 1414. The data fields of trigger frames 1412 and 1414 may comprise the same or different symbol information (e.g., same or different MPDUs) and may be sent (e.g., transmitted) in-phase or out-of-phase with each other. The SIG field of trigger frame 1412 and/or 1414 may comprise an indication of whether the data fields of trigger frames 1412 and 1414 are duplicate or not. If/when the data fields are not duplicate of each other, receiving STAs 1406 and 1408 decode the data fields of trigger frames 1412 and 1414 as two independent data fields. A STA that does not support decoding of two independent data fields (e.g., having only a single receive antenna) may stop decoding the trigger frames at this point. If the data fields are duplicate of each other, receiving STAs 1406 and 1408 decode the data fields of trigger frames 1412 and 1414 as a single data field (which may be possible regardless of the number of receive antennas of the STA).

Trigger frame 1412 comprises a plurality of LTF symbols. The plurality of LTF symbols may be provided in one or more LTFs in trigger frame 1412. The plurality of LTF symbols of trigger frame 1412 may comprise the same symbol information. Similarly, trigger frame 1414 may comprise a plurality of LTF symbols. The plurality of LTF symbols may be provided in one or more LTFs in trigger frame 1414. The plurality of LTF symbols of trigger frame 1414 may comprise the same symbol information.

At least two LTF symbols 1420-1 and 1420-1 of the plurality of LTF symbols of trigger frame 1412 may overlap (in time and frequency) respectively with at least two LTF symbols 1422-1 and 1422-2 of trigger frame 1414. Overlapping LTF symbols 1420-1 and 1422-1 may comprise the same symbol information and may be sent (e.g., transmitted) in-phase with each other. Overlapping LTF symbols 1420-2 and 1422-2 may comprise the same symbol information and may be sent (e.g., transmitted) with a phase shift relative to one another. The phase shift between LTF symbols 1420-2 and 1422-2 may be equal to 180 degrees for all subcarriers. In FIG. 14, this is shown by LTF symbol 1420-2 as comprising a "-LTF" and symbol 1422-2 as comprising an "LTF."

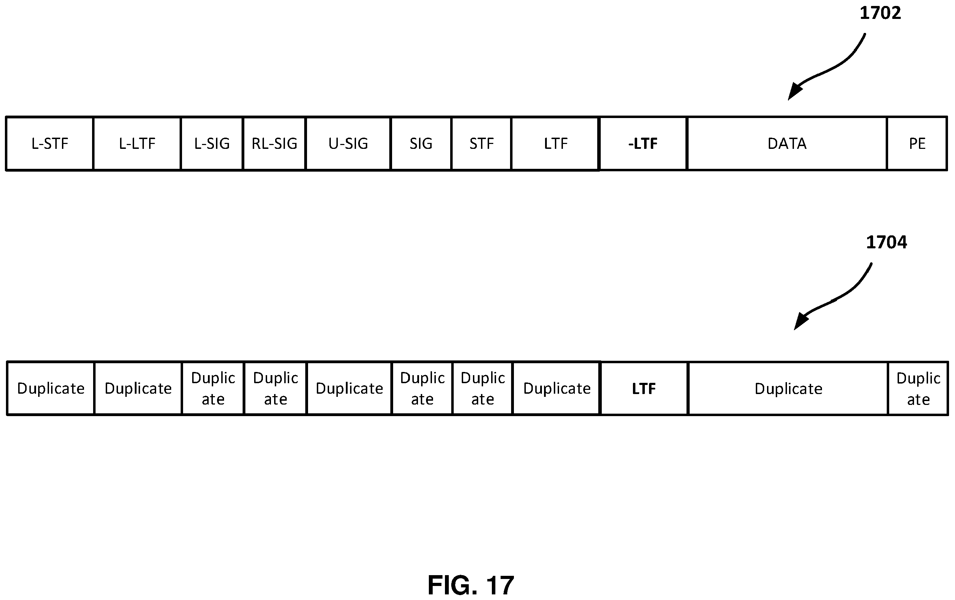

Trigger frames 1412 and 1414 may correspond respectively to trigger frames 1702 and 1704 illustrated in FIG. 17. Each of trigger frames 1412 and 1414 may be comprised of an L-STF, an L-LTF, an L-SIG, an RL-SIG, a U-SIG, a SIG (e.g., EHT-SIG or UHR-SIG), an STF (e.g., EHT-STF or UHR-STF), an LTF (e.g., EHT-LTF or UHR-LTF), a data field, and a PE field. The L-STF, L-LTF, L-SIG, RL-SIG, U-SIG, SIG, STF, data field, and PE field may comprise the same symbol information and may be sent (e.g., transmitted) in-phase in trigger frames 1412 and 1414. The LTF may be comprised of a plurality of LTF symbols in each of trigger frames 1412 and 1414. For a joint trigger transmission comprising two APs such as in example 1400, the LTF may comprise two LTF symbols in trigger frame 1412 that may overlap with two respective LTF symbols of the LTF of trigger frame 1414. The first two overlapping LTF symbols may be identical (same symbol information and phase shift) and the second two overlapping LTF symbols may have the same symbol information but may be phase shifted relative to each other. The phase shift may be equal to 180 degrees for all subcarriers.

Trigger frame 1412 may be comprised of an indication of presence or absence of one or more other trigger frames (e.g., trigger frame 1414), overlapping trigger frame 1412, sent (e.g., transmitted) by one or more other APs. Hereinafter, this indication may be interchangeably referred to as an indication of a joint trigger frame transmission as it may indicate whether trigger frame 1412 is being sent (e.g., transmitted) as part of a joint trigger frame transmission comprising one or more other trigger frames. As trigger frame 1414 may duplicate trigger frame 1412 in the U-SIG and SIG fields, trigger frame 1414 may also comprise the indication in the same manner.

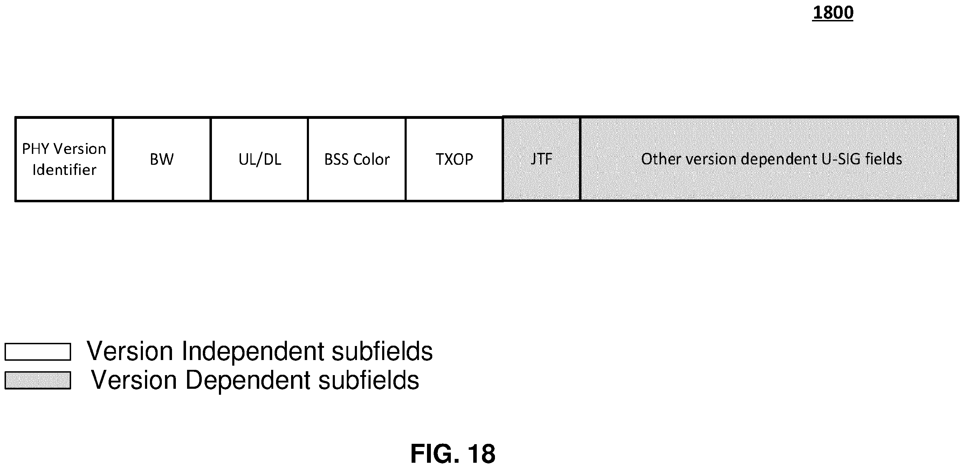

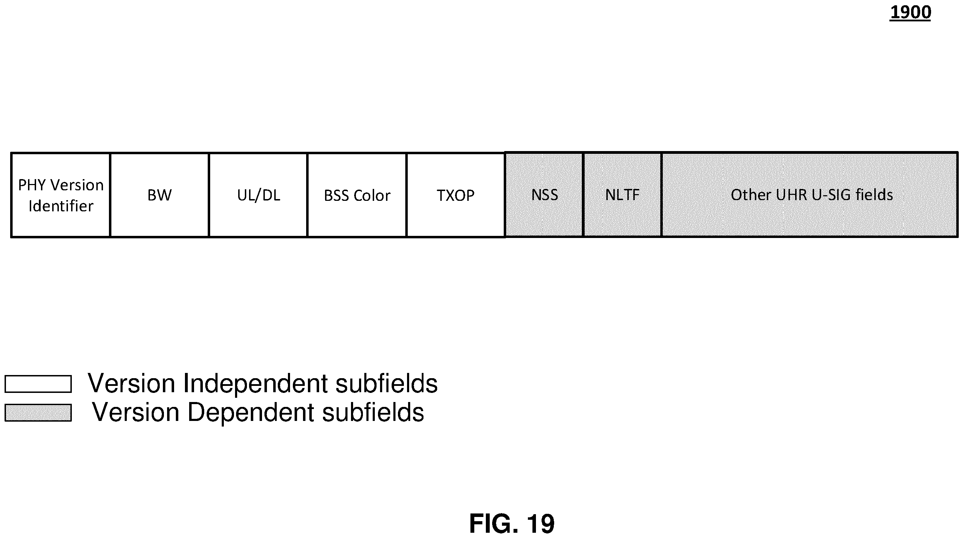

The indication of a joint trigger frame transmission may be provided in the U-SIG or the SIG (e.g., EHT-SIG, UHR-SIG) of trigger frame 1412 (or trigger frame 1414). FIGs. 18 and 19 show example U-SIG formats 1800 and 1900. As shown in FIG. 18, in U-SIG format 1800, the indication of a joint trigger frame transmission may be provided in a joint trigger frame (JTF) subfield of the U-SIG. The JTF subfield may be a version dependent subfield of the U-SIG (e.g., EHT or UHR-specific subfield). A version dependent subfield corresponds to a subfield which interpretation may depend on one or more standards, such as the IEEE 802.11 standard version (e.g., 802.11be, UHR), and/or any other standard relating to the PPDU carrying the U-SIG. This standard version is provided in the version independent PHY version identifier subfield of the U-SIG.

In the U-SIG format 1900, the indication of a joint trigger frame transmission may be provided using a number of spatial streams (NSS) and a number of LTFs (NLTF) subfields of the U-SIG. The NSS and NLTF subfields may be version dependent subfields of the U-SIG (e.g., EHT or UHR-specific subfield). The value of the NLTF subfield may depend on the value of the NSS subfield. For the values 1, 2, 3, 4, 5, 6, 7, and 8 of the NSS subfield, the NLTF subfield may take the corresponding values 1, 2, 4, 4, 6, 6, 8, and 8. For a joint trigger frame transmission involving two APs with a duplicate data stream, the joint trigger frame transmission may be indicated by an NSS subfield set to 1 and an NLTF subfield set to a value greater than 1.

Returning to FIG. 14, trigger frames 1412 and 1414 may each comprise the same resource allocation, allocating RUs to STAs associated with AP 1402 and AP 1404 respectively. The resource allocation may be announced in trigger frame 1410 sent (e.g., transmitted) by AP 1402. In example 1400, the resource allocation may comprise an allocation of a first RU (RU1) to STA 1406, a second RU (RU2) to STA 1408, a third RU (RU3) to STA3 (not shown in FIG. 14) associated with AP 1404, and a fourth RU (RU4) to STA4 (not shown in FIG. 14) associated with AP 1404. Trigger frames 1412 and 1414 may each comprise (in the data field) a respective User Info field for each of STAs 1406, 1408, STA3, and STA4. The respective User Info field indicates the respective RU being allocated to the corresponding STA.

STAs 1406 and 1408 may each receive a superposition signal of trigger frames 1414 and 1416. The time and content synchronization of trigger frames 1412 and 1414 allows STAs 1406 and 1408 to successfully decode the duplicate trigger frame transmission contained in the superposition signal. STAs 1406 and 1408 may decode the U-SIG or SIG field contained in both trigger frames 1414 and 1416 and identify whether a joint trigger frame transmission is being received based on the indication of joint trigger frame transmission contained in the U-SIG or SIG field. STAs 1406 and 1408 may determine the transmit power for respectively TB PPDU 1416 and TB PPDU 1418 using equations (1) and (2) described herein, for example, if the indication of joint trigger frame transmission indicates absence of an overlapping trigger frame from another AP.

STAs 1406 and 1408 may each determine the transmit power for respective TB PPDU 1416 and TB PDDU 1418 based on a received power of trigger frame 1412 and/or a received power of trigger frame 1414, for example, if the indication of joint trigger frame transmission indicates presence of an overlapping trigger frame from another AP. STAs 1406 and 1408 may each rely on the LTF symbols 1420-1 and 1420-2 of trigger frame 1412 and the respectively overlapping LTF symbols 1422-1 and 1422-2 of trigger frame 1414 to estimate the downlink channels from both APs 1402 and 1404 to the STA. STAs 1406 and 1408 may then each estimate the receive power of the trigger frame (or more specifically the receive power of an LTF symbol of the trigger frame) from its associating AP based on the estimate of the downlink channel from its associating AP. Using the estimated receive power of the trigger frame from its associating AP, STAs 1406 and 1408 may each then use equations (1) and (2) described herein to compute the transmit power for respectively TB PPDU 1416 and TB PPDU 1418.

If $P = \begin{bmatrix} 1 & -1 \\ 1 & 1 \end{bmatrix}$ represents the per subcarrier phase shift matrix applied to LTF symbols 1420-1, 1420-2, 1422-1, and 1422-2; and $H = [h1 \; h2]$ represents the per subcarrier downlink channel matrix, where $h1$ denotes the per subcarrier downlink channel from AP 1402 to STA 1406 and $h2$ denotes the per subcarrier downlink channel from AP 1404 to STA 1406; the per subcarrier received signals at STA 1406 may be given by $[y1 \; y2] = HP,$ where y1 denotes the per subcarrier received signal due to overlapping LTF symbols 1420-1 and 1422-1 and where y2 denotes the per subcarrier received signal due to overlapping LTF symbols 1420-2 and 1422-2. The downlink channels from APs 1402 and 1404 to STA 1406 may be estimated as $[h1 \; h2] = [y1 \; y2]P^T$, where $P^T$ represents the transpose of the matrix P.

The receive power of trigger frame 1412 at STA 1406 may be computed as $Rx_{pwr}^{AP1} = \sum |h1|^2$, where the summation is performed across all subcarriers. Similarly, the receive power of trigger frame 1414 at STA 1406 may be computed as $Rx_{pwr}^{AP2} = \sum |h2|^2$. As would be understood by a person of skill in the art, however, other analog and/or digital techniques may also be used to estimate the receive powers of trigger frames 1412 and 1414.

As described herein, STAs 1406 and 1408 may locate their respectively allocated RU in the User Info field of the duplicate trigger frame transmission. STAs 1406 and 1408 may then send (e.g., transmit) respectively TB PPDUs 1416 and 1418 via RU1 and RU2, respectively. TB PPDUs 1416 and 1418 may each be sent (e.g., transmitted) a SIFS after the transmission of trigger frames 1412 and 1414. As such, TB PPDUs 1416 and 1418 may be sent (e.g., transmitted) simultaneously in the uplink.

As would be understood by a person of skill in the art based on the teachings herein, examples are not limited to scenarios involving only two APs and may be readily extended to the joint transmission of more than two overlapping trigger frames from more than two APs. Indeed, in the joint trigger frame transmission scheme, a trigger frame transmitted by an AP may be thought of as corresponding to a PPDU stream of a MIMO PPDU formed by the sent (e.g., transmitted) overlapping trigger frames.

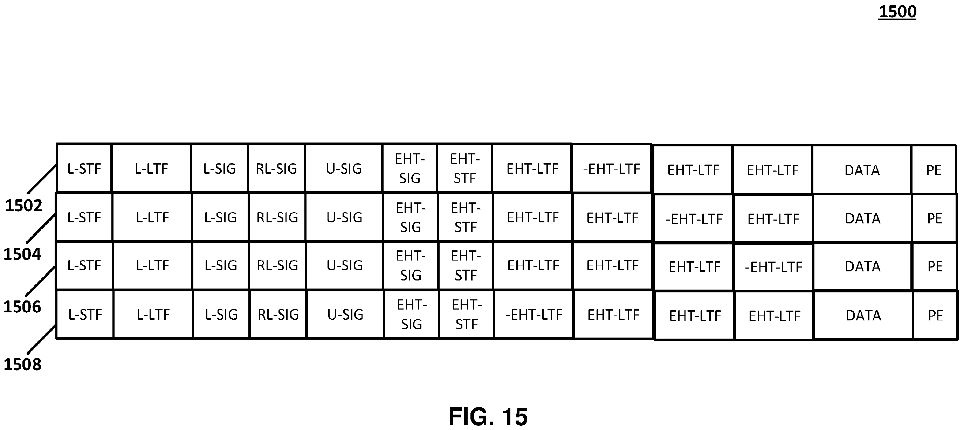

FIG. 15 shows an example MIMO PPDU 1500 in which up to four PPDU streams 1502, 1504, 1506, and 1508 may be sent (e.g., transmitted). The joint transmission of four overlapping trigger frames from four different APs may be analogous to the transmission of MIMO PPDU 1500 but with each of PPDU streams 1502, 1504, 1506, and 1508 sent (e.g., transmitted) by a respective AP.

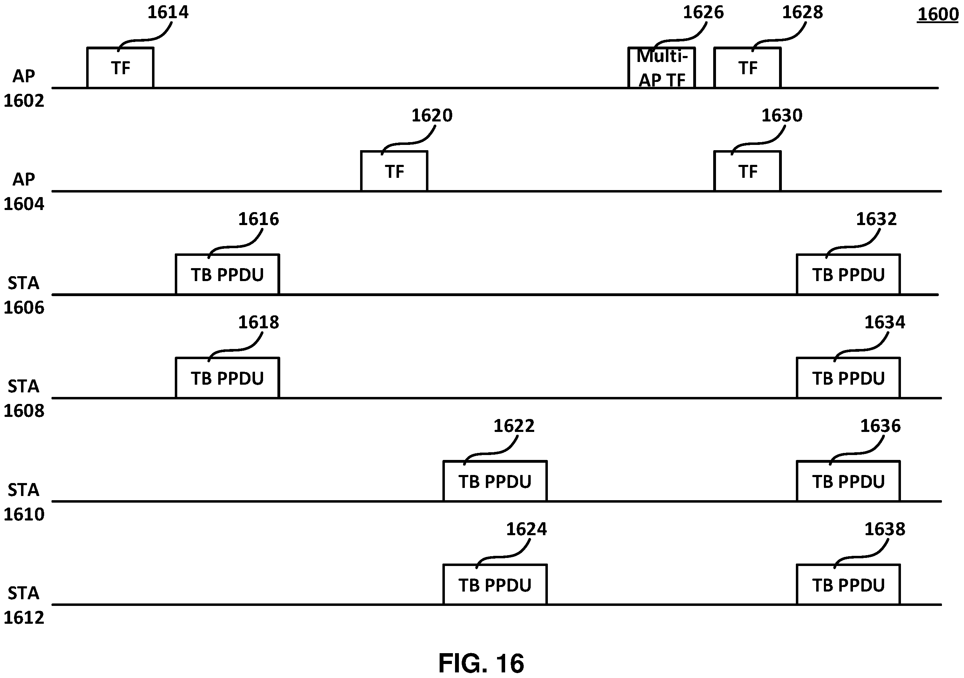

FIG. 16 is an example 1600 that shows another uplink multi-user transmission procedure according to an embodiment. As shown in FIG. 16, example 1600 may be comprised of APs 1602 and 1604 and STAs 1606, 1608, 1610, and 1612. APs 1602 and 1604 may be part of a multi-AP group. AP 1602 may be a master AP of the multi-AP group, and AP 1604 may be a slave AP of the multi-AP group. STAs 1606 and 1608 may be associated with AP 1602, and STAs 1610 and 1612 may be associated with AP 1604.

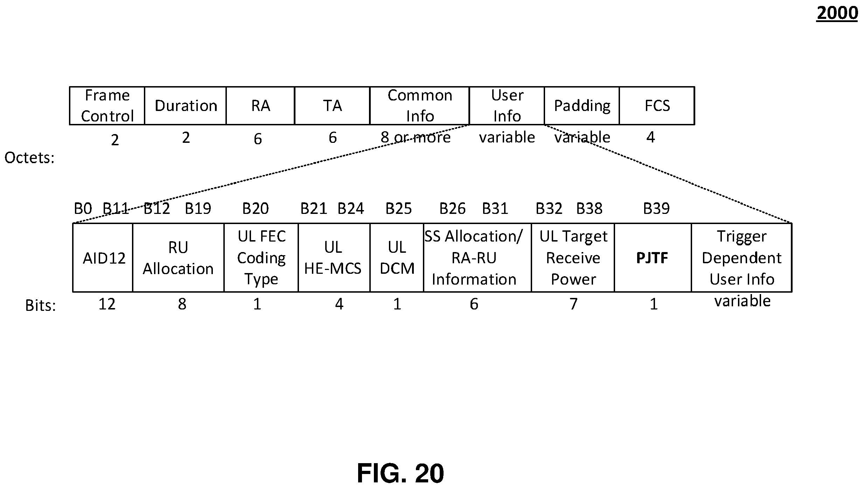

The uplink multi-user transmission procedure may begin with AP 1602 sending (e.g., transmitting) a trigger frame 1614 to its associated STAs 1606 and 1608. Trigger frame 1614 may comprise an indication to one or more of STAs 1606 and 1608 to measure and cache the received power of trigger frame 1614. Trigger frame 1614 may have a similar format as example trigger frame 2000 shown in FIG. 20. Trigger frame 1614 may comprise, in the respective User Info field of each STA allocated by trigger frame 1614, a pre-JTF (PJTF) subfield which may be used to instruct the STA to measure and cache the received power of trigger frame 1614. The PJTF subfield may be provided in bit 39 (B39) (a Reserved field in one or more standards, such as the current 802.11 standard) of the User Info field. The PJTF may not be provided in trigger frame 1614 and the allocated STAs may be configured to measure and cache the received power of every trigger frame from AP 1602.

STAs 1606 and 1608 may send (e.g., transmit) TB PPDUs 1616 and 1618 respectively after or in response to trigger frame 1614. TB PPDUs 1616 and/or 1618 may be sent (e.g., transmitted) a SIFS after transmission of trigger frame 1614.

AP 1604 may send (e.g., transmit) a trigger frame 1620 to its associated STAs 1610 and 1612, for example after or in response to TB PPDUs 1616 and/or 1618 . Like trigger frame 1614, trigger frame 1620 may also comprise an indication to one or more of STAs 1610 and 1612 to measure and cache the received power of trigger frame 1620. Trigger frame 1620 may have a similar format as example trigger frame 2000 described herein. STAs 1610 and 1612 may send (e.g., transmit) TB PPDUs 1622 and 1624 respectively after or in response to trigger frame 1620. TB PPDUs 1622 and 1624 may be sent (e.g., transmitted) a SIFS after transmission of trigger frame 1620.

The AP 1602 may send (e.g., transmit) a multi-AP trigger frame 1626 to AP 1604, for example, based on (e.g., after or in response to) reception of TB PPDU(s) 1622 and/or 1624. Multi-AP trigger frame 1626 may be similar to multi-AP trigger frame 1410 described herein. The same examples described herein with reference to trigger frame 1410 may thus apply to trigger frame 1626. Specifically, multi-AP trigger frame 1626 may trigger AP 1604 to send (e.g., transmit) a joint trigger frame 1630 (to its associated STAs 1610 and 1612) with a trigger frame 1628 sent (e.g., transmitted) by AP 1602 (to its associated STAs 1606 and 1608).

AP 1602 (and/or AP 1604) may comprise, in trigger frame 1628 (and/or trigger frame 1630) an indication to the STAs being allocated by trigger frame 1628 (and/or trigger frame 1630) to use a cached received power of a previous trigger frame from AP 1602 (and/or AP 1604) in computing the transmit power of the TB PPDU sent (e.g., transmitted), after or in response to trigger frame 1628 (and/or trigger frame 1630). Trigger frame 1628 may comprise an indication to STAs 1606 and 1608 to use the cached received power of trigger frame 1614 in computing the transmit power of TB PPDU 1632 and TB PPDU 1634 respectively. Similarly, trigger frame 1630 may comprise an indication to STAs 1610 and 1612 to use the cached received power of trigger frame 1620 in computing the transmit power of TB PPDU 1636 and TB PPDU 1638 respectively.

The STAs 1606, 1608, 1610, and 1612 may each use equations (1) and (2) described herein to compute the transmit power of TB PPDUs 1632, 1634, 1636, and 1638 respectively. STA 1606 may compute the pathloss based on the transmit power of trigger frame 1614 (e.g., trigger frame 1614 may comprise a trigger frame transmit power indication in the AP Tx power subfield of the Common Info field of the trigger frame) and a measured receive power of trigger frame 1614. STA 1606 may then compute the transmit power of TB PPDU 1632 based on the pathloss and the UL target receive power for TB PPDU 1632 (e.g., indicated in trigger frame 1628).

The indication to use the cached received power of a previous trigger frame (implicitly) may indicate the presence of an overlapping trigger frame or that the trigger frame including the indication is a part of a joint trigger frame transmission. The indication instructing allocated STAs to use a cached received power of a previous trigger frame may be provided in the U-SIG of the trigger frame. The indication may be provided in the JTF subfield described herein with reference to FIG. 18. The JTF may be set to the value 2 to instruct the allocated STAs to use a cached trigger frame received power. The JTF may be set to the value 1 to instruct the allocated STAs to estimate the received powers as described herein with respect to FIG. 14. The indication instructing allocated STAs to use a cached received power of a previous trigger frame may be provided in the data field of the trigger frame.

If/when the trigger frames 1628 and 1630 both comprise an indication to use a cached received power of a previous trigger frame, the STAs 1606, 1608, 1610, and 1612 may not need to measure or estimate the received power of the trigger frame (trigger frame 1628 for STAs 1606 and 1608 and trigger frame 1630 for STAs 1610 and 1612) from their respective associating AP. As such, trigger frames 1628 and 1630 may be sent (e.g., transmitted) as overlapping SISO PPDU transmissions instead of as a MIMO PPDU transmission as described herein in example 1400. Trigger frames 1628 and 1630 may each have a PPDU format as shown by example PPDU 2100. Specifically, trigger frames 1628 and 1630 may each comprise a single LTF symbol instead of at least two LTF symbols as described herein.

An AP may instruct an allocated STA to estimate the received power of a trigger frame or to use a cache received power of a previous trigger frame depending on the capabilities of the STA. If the STA does not support channel estimation based on a MIMO PPDU or supports it up to a limited number of streams, the AP may instruct the AP to use the cached received power. The STA may inform the STA of its capabilities during the association procedure.

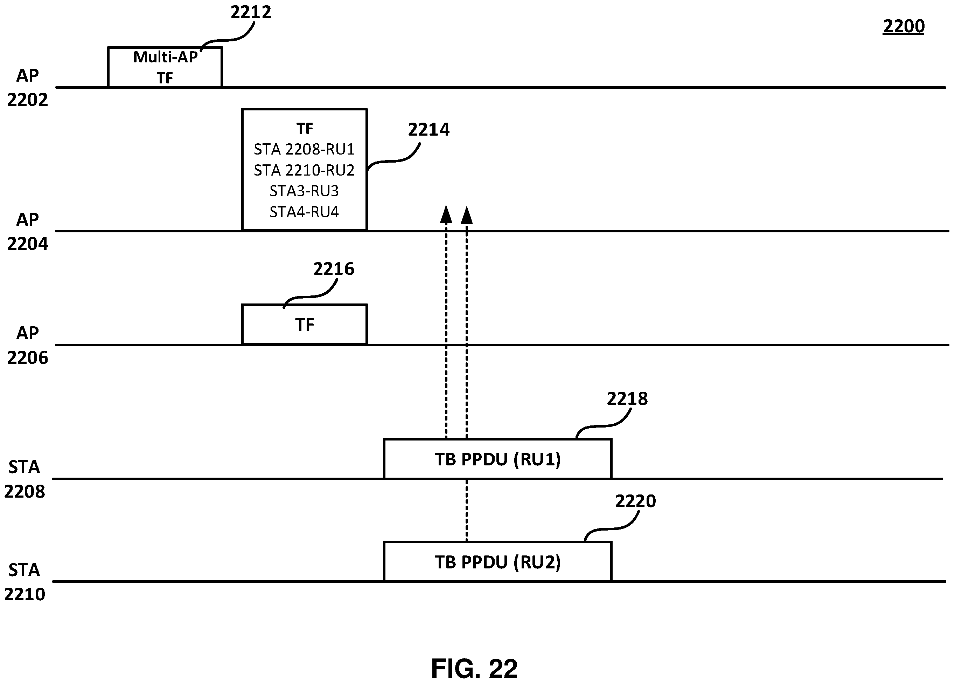

FIG. 22 is an example 2200 that shows another uplink multi-user transmission procedure according to an embodiment. As shown in FIG. 22, example 2200 may be comprised of APs 2202, 2204, and 2206 and STAs 2208 and 2210. The APs 2202, 2204, and 2206 may be part of a multi-AP group. AP 2202 may be a master AP of the multi-AP group, and APs 2204 and 2206 may be slave APs of the multi-AP group. The STAs 2208 and 2210 may be associated with AP 2204. AP 2206 may also have one or more STAs associated with it. For the simplification of presentation, the STAs associated with AP 2206 are not shown in FIG. 22 and are referred to hereinafter (and in FIG. 22) as "STA3" and "STA4."

As shown in FIG. 22, the uplink multi-user transmission procedure may begin with the AP 2202 sending (e.g., transmitting) a multi-AP trigger frame 2212. The AP 2212 may be a holder of a current TXOP and may decide to share the TXOP with the APs 2206 and 2208 to perform a coordinated transmission (e.g., overlapping in time and frequency) during the TXOP. AP 2202 may be referred to as a sharing AP. Trigger frame 2212 may be configured to inform APs 2204 and 2206 of the TXOP sharing opportunity. Additionally, trigger frame 2212 may serve to synchronize APs 2204 and 2206 for the coordinated transmission.

The coordinated transmission comprises transmission of overlapping (in time and frequency) trigger frames by the APs 2206 and 2208. Synchronization between the APs 2204 and 2206 may comprise time synchronization to enable transmission of the trigger frames by APs 2204 and 2206 in a time-overlapping manner. The trigger frames by APs 2204 and 2206 may be sent (e.g., transmitted) a SIFS after transmission of trigger frame 2212. Synchronization between APs 2204 and 2206 may comprise content synchronization of the overlapping trigger frames by APs 2204 and 2206. The content synchronization of the overlapping trigger frames may be necessary for a STA (associated with AP 2204 or 2206) to successfully receive the trigger frame from its associating AP in the presence of an overlapping trigger frame from another AP. Trigger frame 2212 may comprise a resource allocation for all STAs to be allocated by the overlapping trigger frames (both STAs associated with AP 2204 and STAs associated with AP 2206). The resource allocation may be duplicated in both of the overlapping trigger frames by APs 2204 and 2206.

The APs 2204 and 2206 may send (e.g., transmit) trigger frames 2214 and 2216 respectively, for example, after the transmission of the trigger frame 2212 by an AP 1402. The trigger frames 2214 and 2216 may be sent (e.g., transmitted) a SIFS after the transmission of trigger frame 2212. Trigger frames 2214 and 2216 may overlap in both time and frequency. Trigger frames 2214 and 2216 may have similar format and content as trigger frames 1412 and 1414 respectively described herein with reference to FIG. 14. The same embodiments described herein with reference to trigger frames 1412 and 1414 may thus apply to trigger frames 1412 and 1414.

In the same manner as described with reference to FIG. 14, the STAs 2208 and 2210 may locate their respectively allocated RU in the User Info field of the duplicate trigger frame transmission. STAs 2208 and 2210 may then send (e.g., transmit) respectively the TB PPDUs 2218 and 2220 via RU1 and RU2, respectively. TB PPDUs 2218 and 2220 may each be sent (e.g., transmitted) a SIFS after the transmission of the trigger frames 2214 and 2216. TB PPDUs 2218 and 2220 may be sent (e.g., transmitted) simultaneously in the uplink.

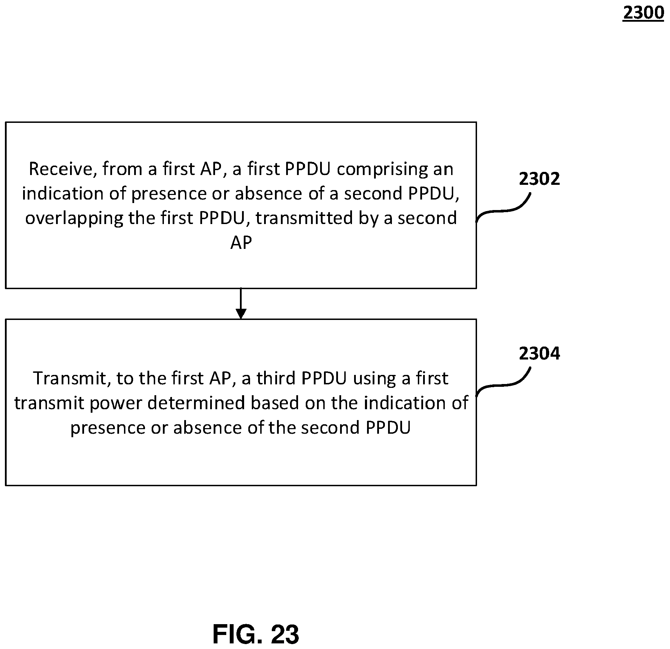

FIG. 23 shows an example process 2300. Example process 2300 may be performed by a STA, such as STA 1406, 1408, 1606, 1608, 1610, 1612, 2208, or 2210, for example. As shown in FIG. 23, process 2300 may be comprised of steps 2302 and 2304. Step 2302 comprises receiving, from a first AP, a first PPDU comprising an indication of presence or absence of a second PPDU, overlapping the first PPDU, sent (e.g., transmitted) by a second AP. The STA may be associated with the first AP. The first AP and the second AP may be part of a multi-AP group. The first AP and the second AP may form a coordinated AP set. The first AP may be the master AP and the second AP may be a slave AP of the multi-AP group, or vice versa.

The first PPDU and the second PPDU may overlap in time and frequency. The first PPDU and the second PPDU may be duplicate in one or more fields. The first PPDU and the second PPDU may comprise duplicate data fields. The first PPDU and the second PPDU may comprise duplicate SIG or U-SIG. The first PPDU may comprise a first trigger frame and the second PPDU may comprise a second trigger frame. The first PPDU and the second PPDU may comprise the same resource allocation. The resource allocation may comprise a resource unit allocated to the STA.

The first PPDU may comprise a signal field comprising the indication of presence or absence of the second PPDU. The signal field may be a U-SIG or a SIG (e.g., ETH-SIG or UHR-SIG). If the indication of presence or absence of the second PPDU indicates presence of the second PPDU, the first PPDU and the second PPDU may each comprise a plurality of LTF symbols, and at least two LTF symbols of the plurality of LTF symbols of the first PPDU may overlap with at least two LTF symbols of the plurality of LTF symbols of the second PPDU. A first LTF symbol of the least two LTF symbols of the first PPDU is phase shifted relative to an overlapping second LTF symbol of the at least two LTF symbols of the second PPDU. A phase shift between the first LTF symbol and the second LTF symbol may be equal to 180 degrees for all subcarriers.

Step 2304 comprises sending (e.g., transmitting), to the first AP, a third PPDU using a first transmit power determined based on the indication of presence or absence of the second PPDU. The third PPDU may be sent (e.g.,

transmitted) a SIFS after receiving the first PPDU.

Process 2300 may further comprise determining, by the STA, the first transmit power based on the indication of presence or absence of the second PPDU. If the indication indicates absence of the second PPDU, the STA may determine the first transmit power based on a received power of the first PPDU as described in equations (1) and (2) herein. The received power of the first PPDU may comprise a received power of an LTF of the first PPDU. If the indication indicates presence of the second PPDU, the STA may determine the first transmit power based on a received power of the first PPDU and a received power of the second PPDU. The received power of the first PPDU may comprise a received power of an LTF of the second PPDU. The received power of the first PPDU and/or of the second PPDU may be an estimated received power.

Process 2300 may further comprise, (e.g., before step 2302) receiving, by the STA from the first AP, a fourth PPDU. The fourth PPDU may comprise a trigger frame. The fourth PPDU may comprise an indication to the STA to measure and cache the received power of the fourth PPDU. The fourth PPDU may comprise an indication of a transmit power used to send (e.g., transmit) the fourth PPDU.

Process 2300 may further comprise determining, by the STA, a second transmit power based on a received power of the fourth PPDU. The STA may determine the second transmit power based on the received power of the fourth PPDU as described in equations (1) and (2) herein. Wherein the indication of presence or absence of the second PPDU indicates presence of the second PPDU, process 2300 may further comprise determining, by the STA, the first transmit power of the third PPDU based on the second transmit power. The data field of the first PPDU may comprise an indication of whether the STA is to transmit the third PPDU based on the second transmit power.

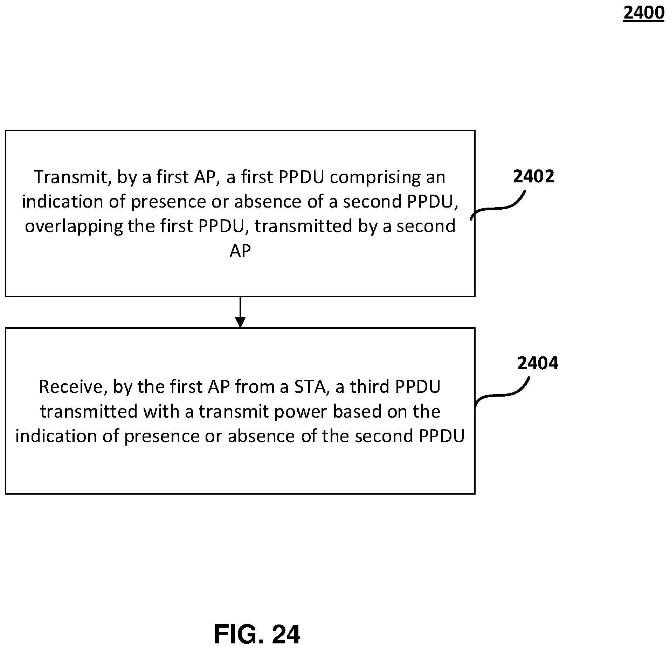

FIG. 24 shows an example process 2400. Process 2400 may be performed by a first AP, such as AP 1402, 1404, 1602, 1604, 2204, or 2206. As shown in FIG. 24, process 2400 may be comprised of steps 2402 and 2404. Step 2402 comprises sending (e.g., transmitting), by the first AP, a first PPDU comprising an indication of presence or absence of a second PPDU, overlapping the first PPDU, sent (e.g., transmitted) by a second AP. The first AP and the second AP may be part of a multi-AP group. The first AP and the second AP may form a coordinated AP set. The first AP may be the master AP and the second AP may be a slave AP of the multi-AP group, or vice versa.

The first PPDU and the second PPDU may overlap in time and frequency. The first PPDU and the second PPDU may be duplicate in one or more fields. The first PPDU and the second PPDU may comprise duplicate data fields. The first PPDU and the second PPDU may comprise duplicate SIG or U-SIG. The first PPDU may comprise a first trigger frame and the second PPDU may comprise a second trigger frame. The first PPDU and the second PPDU may comprise the same resource allocation. The resource allocation may comprise a resource unit allocated to the STA.

The first PPDU comprises a signal field comprising the indication of presence or absence of the second PPDU. The signal field may be a U-SIG or a SIG (e.g., ETH-SIG or UHR-SIG). If the indication of presence or absence of the second PPDU indicates presence of the second PPDU, the first PPDU and the second PPDU may each comprise a plurality of LTF symbols, and at least two LTF symbols of the plurality of LTF symbols of the first PPDU may overlap with at least two LTF symbols of the plurality of LTF symbols of the second PPDU. A first LTF symbol of the least two LTF symbols of the first PPDU is phase shifted relative to an overlapping second LTF symbol of the at least two LTF symbols of the second PPDU. A phase shift between the first LTF symbol and the second LTF symbol may be equal to 180 degrees for all subcarriers.

Process 2400 may further comprise receiving, by the first AP from a third AP, a first frame soliciting the first AP to send (e.g., transmit) the first PPDU. The third AP may be the same as the second AP. Alternatively, the third AP may be an AP that coordinates the joint frame transmission by the first and second AP. The third AP may thus not participate in the joint frame transmission. Process 2400 may comprise sending (e.g., transmitting), by the first AP to the second AP, a first frame soliciting the second AP to transmit the second PPDU.

Step 2404 comprises receiving, by the first AP from a STA, a third PPDU sent (e.g., transmitted) with a transmit power based on the indication of presence or absence of the second PPDU. The STA may be associated with the first AP. If the indication indicates absence of the second PPDU, the first transmit power may be determined by the STA based on a received power of the first PPDU as described in equations (1) and (2) herein. The received power of the first PPDU may comprise a received power of an LTF of the first PPDU. If the indication indicates presence of the second PPDU, the first transmit power may be determined by the STA based on a received power of the first PPDU and a received power of the second PPDU. The received power of the first PPDU may comprise a received power of an LTF of the second PPDU. The received power of the first PPDU and/or of the second PPDU may be an estimated received power.

Process 2400 may further comprise, (e.g., before step 2402) sending (e.g., transmitting), by the first AP to the STA, a fourth PPDU. The fourth PPDU may comprise a trigger frame. The fourth PPDU may comprise an indication to the STA to measure and cache the received power of the fourth PPDU. The fourth PPDU may comprise an indication of a transmit power used to send (e.g., transmit) the fourth PPDU. Wherein the indication of presence or absence of the second PPDU indicates presence of the second PPDU, the transmit power of the third PPDU may be based on the received power of the fourth PPDU. The data field of the first PPDU may comprise an indication of whether the STA is to send (e.g., transmit) the third PPDU based on the second transmit power.

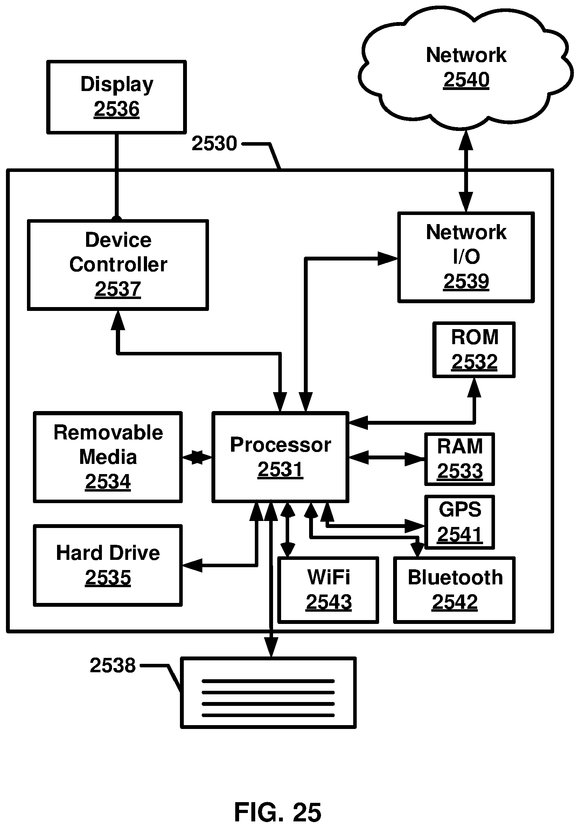

FIG. 25 shows example elements of a computing device that may be used to implement any of the various devices described herein, including, for example, a STA, an AP, communication devices, and/or any computing and/or communication device described herein. The computing device 2530 may comprise one or more processors 2531, which may execute instructions stored in the random-access memory (RAM) 2533, the removable media 2534 (such as a Universal Serial Bus (USB) drive, compact disk (CD) or digital versatile disk (DVD), or floppy disk drive), or any other desired storage medium. Instructions may also be stored in an attached (or internal) hard drive 2535. The computing device 2530 may also comprise a security processor (not shown), which may execute instructions of one or more computer programs to monitor the processes executing on the processor 2531 and any process that requests access to any hardware and/or software components of the computing device 2530 (e.g., ROM 2532, RAM 2533, the removable media 2534, the hard drive 2535, the device controller 2537, a network interface 2539, a GPS 2541, a Bluetooth interface 2542, a WiFi interface 2543, etc.). The computing device 2530 may comprise one or more output devices, such as the display 2536 (e.g., a screen, a display device, a monitor, a television, etc.), and may comprise one or more output device controllers 2537, such as a video processor. There may also be one or more user input devices 2538, such as a remote control, keyboard, mouse, touch screen, microphone, etc. The computing device 2530 may also comprise one or more network interfaces, such as a network interface 2539, which may be a wired interface, a wireless interface, or a combination of the two. The network interface 2539 may provide an interface for the computing device 2530 to communicate with a network 2540 (e.g., a RAN, or any other network). The network interface 2539 may comprise a modem (e.g., a cable modem), and the external network 2540 may comprise communication links, an external network, an in-home network, a provider's wireless, coaxial, fiber, or hybrid fiber/coaxial distribution system (e.g., a DOCSIS network), or any other desired network. Additionally, the computing device 2530 may comprise a location-detecting device, such as a global positioning system (GPS) microprocessor 2541, which may be configured to receive and process global positioning signals and determine, with possible assistance from an external server and antenna, a geographic position of the computing device 2530.

The example in FIG. 25 may be a hardware configuration, although the components shown may be implemented as software as well. Modifications may be made to add, remove, combine, divide, etc. components of the computing device 2530 as desired. Additionally, the components may be implemented using basic computing devices and components, and the same components (e.g., processor 2531, ROM storage 2532, display 2536, etc.) may be used to implement any of the other computing devices and components described herein. For example, the various components described herein may be implemented using computing devices having components such as a processor executing computer-executable instructions stored on a computer-readable medium, as shown in FIG. 25. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1A. A method comprising receiving, by a station and from a first access point, a first physical layer protocol data unit (PPDU) comprising an indication of a presence or an absence of a second PPDU, overlapping with the first PPDU and transmitted by a second access point.

Clause 1B. The method of clause 1A further comprising determining, by the station and based on the indication of a presence or an absence of the second PPDU, a first transmit power for transmission of a third PPDU to the first access point.

Clause 1C. The method of any one of clauses 1A to 1B further comprising transmitting, by the station and to the first access point, the third PPDU using the first transmit power. Clause 1 herein may comprise any one or more of clause 1A, clause 1B, and/or clause 1C.

Clause 2. The method of clause 1, wherein the determining of the first transmit power by the station is further based on a received power of the first PPDU and a received power of the second PPDU.

Clause 3. The method of any one of clauses 1 to 2 further comprising receiving, by a station and from a first access point, the first PPDU wherein the indication of a presence or absence of a second PPDU, overlapping with the first PPDU indicates a presence of a second PPDU overlapping the first PPDU.

Clause 4. The method of any one of clauses 1 to 3 wherein the indication of a presence or an absence of the second PPDU indicates a presence of the second PPDU, and wherein the first PPDU and the second PPDU comprises a plurality of long training field (LTF) symbols, and at least two LTF symbols of the plurality of LTF symbols of the first PPDU overlap with at least two LTF symbols of the plurality of LTF symbols of the second PPDU.

Clause 5. The method of any one of clauses 1 to 4 wherein a first long training field (LTF) symbol of at least two LTF symbols of the first PPDU is phase shifted relative to an overlapping second LTF symbol of the at least two LTF symbols of the second PPDU; and wherein a phase shift between the first LTF symbol and the second LTF symbol is equal to 180 degrees for all subcarriers.

Clause 6. A wireless device comprising one or more processors and memory storing instructions that, when executed by the one or more processors , cause the wireless device to perform the method of any one of clauses 1 to 5.

Clause 7. A system comprising a wireless device configured to perform the method of any one of clauses 1 to 5; and a base station configured to receive a first PPDU.

Clause 8. A computer readable medium storing instructions that, when executed, cause performance of the method of any one of clauses 1 to 5.

Clause 9A. A method comprising receiving, by a station and from a first access point, a first physical layer protocol data unit (PPDU) comprising an indication of a presence of a second PPDU, overlapping with the first PPDU and transmitted by a second access point

Clause 9B. The method of clause 9A further comprising transmitting, by the station and to the first access point, a third PPDU using a transmit power that is based on the indication. Clause 9 herein may comprise any one or more of clause 9A and/or clause 9B.

Clause 10. The method of clause 9, wherein a data field of the first PPDU comprises an indication of whether the station is to transmit the third PPDU based on a second transmit power.

Clause 11. The method of any one of clauses 9 to 10, wherein the second PPDU comprises a signal field (SIG) and a data field and wherein a SIG of the first PPDU is a duplicate of the SIG of the second PPDU, and a data field of the first PPDU is a duplicate of the data field of the second PPDU, and the SIG of the second PPDU comprises an indication of whether a data field of the first PPDU is a duplicate of the data field of the second PPDU.

Clause 12. The method of any one of clauses 9 to 11, wherein the first access point and the second access point belong to a multi-access point group and wherein the first access point or the second access point is a master access point of the multi-access point group.

Clause 13. The method of any one of clauses 9 to 12, wherein the first PPDU comprises a trigger frame indicating a frequency resource allocation to the station for transmitting the third PPDU, and wherein, the third PPDU is transmitted within a short interframe space after the receiving of the first PPDU and the first PPDU and the second PPDU overlap in both time and frequency.

Clause 14. The method of any one of clauses 9 to 13, wherein a data field of the first PPDU is a duplicate of the data field of the second PPDU.

Clause 15. The method of any one of clauses 9 to 14, further comprising receiving, by the station from the first access point, a fourth PPDU and determining, by the station, a second transmit power based on a received power of the fourth PPDU.

Clause 16. A wireless device comprising one or more processors and memory storing instructions that, when executed by the one or more processors, cause the wireless device to perform the method of any one of clauses 9 to 15.

Clause 17. A system comprising a wireless device configured to perform the method of any one of clauses 9 to 15 and a base station configured to receive a first PPDU.

Clause 18. A computer readable medium storing instructions that, when executed, cause performance of the method of any one of clauses 9 to 15.

Clause 19A. A method comprising transmitting, by a first access point, a first physical layer protocol data unit (PPDU) comprising an indication of a presence or an absence of a second PPDU, overlapping with the first PPDU and transmitted by a second access point

Clause 19B. The method of clause 19A further comprising receiving, by the first access point and from a station, a third PPDU transmitted based on the indication of a presence or an absence of the second PPDU. Clause 19 herein may comprise any one or more of clause 19A and/or clause 19B.

Clause 20. The method of clause 19, further comprising receiving, by the first access point from a third access point, a first frame soliciting the first access point to transmit the first PPDU.

Clause 21. The method of any one of clauses 19 to 20, further comprising transmitting, by the first access point to the second access point, a first frame soliciting the second access point to transmit the second PPDU.

Clause 22. The method of any one of clauses 19 to 21, further comprising transmitting, by the first access point to the station, a fourth PPDU and wherein the fourth PPDU comprises an indication of a transmit power used to transmit the fourth PPDU.

Clause 23. The method of any one of clauses 19 to 22, wherein the indication of presence or absence of the second PPDU indicates presence of the second PPDU, and wherein the transmit power of the third PPDU is further based on a received power on the fourth PPDU.

Clause 24. The method of any one of clauses 19 to 23, wherein a data field of the first PPDU comprises an indication of whether the station is to transmit the third PPDU based on a received power of the fourth PPDU.

Clause 25. The method of any one of clauses 19 to 24, wherein the first access point and the second access point belong to a multi-access point group and wherein, the first access point, second access point, or third access point is a master access point.

Clause 26. The method of any one of clauses 19 to 25, wherein the first PPDU comprises a trigger frame indicating a frequency resource allocation to the station for transmission of the third PPDU and wherein the third PPDU is received within a short interframe space after the transmitting of the first PPDU.

Clause 27. A wireless device comprising one or more processors and memory storing instructions that, when executed by the one or more processors, cause the wireless device to perform the method of any one of clauses 19 to 26.

Clause 28. A system comprising a wireless device configured to perform the method of any one of clauses 19 to 26; and a base station configured to receive a first PPDU.

Clause 29. A computer readable medium storing instructions that, when executed, cause performance of the method of any one of clauses 19 to 26.

A computing device may perform a method comprising multiple operations. A station may receive from a first access point, a first physical layer protocol data unit (PPDU) comprising an indication of a presence or an absence of a second PPDU, overlapping with the first PPDU and transmitted by a second access point. A station may determine a first transmit power for transmission of a third PPDU to the first access point, based on the indication of a presence or an absence of the second PPDU. A station may send to the first access point, the third PPDU using the first transmit power. The station may further determine the first transmit power based on a received power of the first PPDU and a received power of the second PPDU. A station may receive from a first access point, the first PPDU wherein the indication of a presence or absence of a second PPDU, overlapping with the first PPDU may indicate a presence of a second PPDU overlapping the first PPDU. The indication of a presence or an absence of the second PPDU may indicate a presence of the second PPDU. The first PPDU and the second PPDU may comprise a plurality of long training field (LTF) symbols, and at least two LTF symbols of the plurality of LTF symbols of the first PPDU may overlap with at least two LTF symbols of the plurality of LTF symbols of the second PPDU. A first long training field (LTF) symbol of at least two LTF symbols of the first PPDU may be phase shifted relative to an overlapping second LTF symbol of the at least two LTF symbols of the second PPDU and wherein a phase shift between the first LTF symbol and the second LTF symbol may be equal to 180 degrees for all subcarriers. A computing device may comprise one or more processors and memory storing instructions that, when executed by the one or more processors, may cause the computing device to perform any one or more of the operations described herein. A system may comprise a station configured to perform any one or more of the operations described herein, and a first access point configured to send the first PPDU. A computer-readable medium may store instructions that, when executed, cause performance of any one or more of the operations described herein.

A computing device may perform a method comprising multiple operations. A station may receive from a first access point, a first physical layer protocol data unit (PPDU) comprising an indication of a presence of a second PPDU, overlapping with the first PPDU and transmitted by a second access point. The station may send to the first access point, a third PPDU using a transmit power that is based on the indication. A data field of the first PPDU may comprise an indication of whether the station is to transmit the third PPDU based on a second transmit power. The second PPDU may comprise a signal field (SIG) and a data field wherein a SIG of the first PPDU is a duplicate of the SIG of the second PPDU, and a data field of the first PPDU is a duplicate of the data field of the second PPDU, and the SIG of the second PPDU comprises an indication of whether a data field of the first PPDU is a duplicate of the data field of the second PPDU. The first access point and the second access point may belong to a multi-access point group; and the first access point or the second access point may be a master access point of the multi-access point group. The first PPDU may comprise a trigger frame indicating a frequency resource allocation to the station for transmitting the third PPDU. The third PPDU may be sent within a short interframe space after the receiving of the first PPDU and the first PPDU and the second PPDU overlap in both time and frequency. A data field of the first PPDU may be a duplicate of the data field of the second PPDU. The station may receive from the first access point, a fourth PPDU. The station may determine a second transmit power based on a received power of the fourth PPDU. A computing device may comprise one or more processors and memory storing instructions that, when executed by the one or more processors, may cause the computing device to perform any one or more of the operations described herein. A system may comprise a station configured to perform any one or more of the operations described herein, and a first access point configured to send the first PPDU. A computer-readable medium may store instructions that, when executed, cause performance of any one or more of the operations described herein.

A computing device may perform a method comprising multiple operations. A first access point may send a first physical layer protocol data unit (PPDU) comprising an indication of a presence or an absence of a second PPDU, overlapping with the first PPDU and transmitted by a second access point. The first access point may receive from a station, a third PPDU transmitted based on the indication of a presence or an absence of the second PPDU. The first access point may receive from a third access point, a first frame soliciting the first access point to send the first PPDU. The first access point may send to the second access point, a first frame soliciting the second access point to send the second PPDU. The first access point may send (e.g., transmit) to the station, a fourth PPDU. The fourth PPDU may comprise an indication of a transmit power used to send the fourth PPDU. The indication of presence or absence of the second PPDU may indicate presence of the second PPDU. The transmit power of the third PPDU may be based on a received power on the fourth PPDU. A data field of the first PPDU may comprise an indication of whether the station is to transmit the third PPDU based on a received power of the fourth PPDU. The first access point and the second access point may belong to a multi-access point group, and the first access point, second access point, or third access point may be a master access point. The first PPDU may comprise a trigger frame indicating a frequency resource allocation to the station for transmission of the third PPDU. The third PPDU may be received within a short interframe space after the sending (e.g., transmitting) of the first PPDU. A computing device may comprise one or more processors and memory storing instructions that, when executed by the one or more processors, may cause the computing device to perform any one or more of the operations described herein. A system may comprise an access point configured to perform any one or more of the operations described herein, and a station configured to receive the first PPDU. A computer-readable medium may store instructions that, when executed, cause performance of any one or more of the operations described herein.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 3GPP or non-3GPP release, IEEE 802.11 Standard(s) (e.g., IEEE 802.11be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 6G, 3GPP or non-3GPP, IEEE 802.11 Standards (e.g., IEEE 802.11be, beyond IEEE 802.11be), or Wi-Fi Alliance (WFA) Standards (e.g., Wi-Fi 7, Wi-Fi 8) technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as access points (APs), AP multi-link devices(MLDs), stations (STAs), non-AP STAs, non-AP MLDs, base stations, wireless devices or user equipment (wireless device), servers, switches, antennas, and/or the like. A network may comprise any wireless technology, including but not limited to, cellular, wireless, Wi-Fi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:

   receiving, by a station and from a first access point, a first physical layer protocol data unit (PPDU) comprising an indication of a presence or an absence of a second PPDU, overlapping with the first PPDU and transmitted by a second access point;
   determining, by the station and based on the indication of a presence or an absence of the second PPDU, a first transmit power for transmission of a third PPDU to the first access point; and
   transmitting, by the station and to the first access point, the third PPDU using the first transmit power.

2. The method of claim 1, wherein the determining of the first transmit power by the station is further based on:

   a received power of the first PPDU; and
   a received power of the second PPDU.

3. The method of any one of claims 1 to 2, further comprising receiving, by a station and from a first access point, the first PPDU wherein the indication of a presence or absence of a second PPDU, overlapping with the first PPDU, indicates a presence of a second PPDU overlapping the first PPDU.

4. The method of any one of claims 1 to 3, wherein the indication of a presence or an absence of the second PPDU indicates a presence of the second PPDU, and wherein:

   the first PPDU and the second PPDU comprises a plurality of long training field (LTF) symbols, and
   at least two LTF symbols of the plurality of LTF symbols of the first PPDU overlap with at least two LTF symbols of the plurality of LTF symbols of the second PPDU.

5. The method of any one of claims 1 to 4, wherein a first long training field (LTF) symbol of at least two LTF symbols of the first PPDU is phase shifted relative to an overlapping second LTF symbol of the at least two LTF symbols of the second PPDU; and wherein a phase shift between the first LTF symbol and the second LTF symbol is equal to 180 degrees for all subcarriers.

6. The method of any one of claims 1 to 5, wherein a data field of the first PPDU comprises an indication of whether the station is to transmit the third PPDU based on a second transmit power.

7. The method of any one of claims 1 to 6, wherein the first PPDU comprises a signal field (SIG) comprising the indication of presence or absence of the second PPDU.

8. The method of any one of claims 1 to 7, wherein the second PPDU comprises a SIG and a data field; and wherein:

a SIG of the first PPDU is a duplicate of the SIG of the second PPDU,
a data field of the first PPDU is a duplicate of the data field of the second PPDU, and
the SIG of the second PPDU comprises an indication of whether a data field of the first PPDU is a duplicate of the data field of the second PPDU.

9. The method of any one of claims 1 to 8, wherein the first access point and the second access point belong to a multi-access point group, and wherein the first access point or the second access point is a master access point of the multi-access point group.

10. The method of any one of claims 1 to 9, wherein the first PPDU comprises a trigger frame indicating a frequency resource allocation to the station for transmitting the third PPDU, and wherein:

the third PPDU is transmitted within a short interframe space after the receiving of the first PPDU; and
the first PPDU and the second PPDU overlap in both time and frequency.

11. The method of any one of claims 1 to 10, wherein a data field of the first PPDU is a duplicate of the data field of the second PPDU.

12. The method of any one of claims 1 to 11, further comprising:

receiving, by the station from the first access point, a fourth PPDU; and
determining, by the station, a second transmit power based on a received power of the fourth PPDU.

13. A computing device comprising:

one or more processors; and
memory storing instructions that, when executed, cause the computing device to perform the method of any one of claims 1 to 12.

14. A system comprising:

a station configured to perform the method of any one of claims 1 to 12; and
an access point configured to transmit the first PPDU.

15. A computer readable medium storing instructions that, when executed, cause performance of the method of any one of claims 1 to 12.

**FIG. 1**

EP 4 422 288 A1

210

220                    240

| processor |—| Tx/Rx |

230

| memory |

260

290                    270

| Tx/Rx |—| processor |

280

| memory |

**FIG. 2**

EP 4 422 288 A1

Multi-AP Controller
302

AP1

Multi-AP group
304

AP4

AP7

AP2

AP3

Multi-AP group
306

Multi-AP group
308

AP5

AP6

**FIG. 3**

Time

EDCA

COFDMA

AP2

AP1

AP1 AP2 AP3 AP4

AP1 AP2 AP3 AP4

TXOP

TXOP

80 MHz

20 MHz

Frequency

FIG. 4

EP 4 422 288 A1

500

502-1                    502-2

508

510        512

504-1                    504-2

FIG. 5

FIG. 6

EP 4 422 288 A1

700

Channel sounding and estimation
710

Estimation feedback
712

AP
702

Multi-AP
trigger

714

Multi-AP
NDPA

716-1

Multi-AP
NDP

718-1

Multi-AP
trigger

720

AP
704

Multi-AP
NDPA

716-2

Multi-AP
NDP

718-2

STA
706

NDP
Feedback

722

STA
708

NDP
Feedback

724

FIG. 7

FIG. 8

EP 4 422 288 A1

900

| AP 902 | | 912 Multi-AP Trigger Frame | 914 Trigger Frame | | 924 Multi-STA BA | |

| AP 904 | | | 916 Trigger Frame | | 926 BA | |

| STA 906 | | | | 918 DATA | | |

| STA 908 | | | | 920 DATA | | |

| STA 910 | | | | 922 DATA | | |

FIG. 9

**FIG. 10**

FIG. 11

EP 4 422 288 A1

**1200**

| Trigger Type | UL Length | More TF | CS Required | UL BW | GI And HE-LTF Type | Mu-MIMO HE-LTF Mode | Number of HE-LTF Symbols And Midamble Periodicity |
|---|---|---|---|---|---|---|---|
| B0   B3 | B4   B15 | B16 | B17 | B18   B19 | B20   B21 | B22 | B23   B25 |

Bits:   4   12   1   1   2   2   1   3

| UL STBC | LDPC Extra Symbol Segment | Ap Tx Power | Pre-FEC Padding Factor | PE Disambiguity | UL Spatial Reuse | Doppler | UL HE-SIG-A2 Reserved |
|---|---|---|---|---|---|---|---|
| B26 | B27 | B28   B33 | B34   B35 | B36 | B37   B52 | B53 | B54   B62 |

Bits:   1   1   6   2   1   16   1   9

| Reserved | Trigger Dependent Common Info |
|---|---|
| B63 | |

Bits:   1   variable

| Frame Control | Duration | RA | TA | Common Info | User Info | Padding | FCS |
|---|---|---|---|---|---|---|---|

Octets:   2   2   6   6   8 or more   variable   variable   4

| AID12 | RU Allocation | UL FEC Coding Type | UL HE-MCS | UL DCM | SS Allocation/ RA-RU Information | UL Target Receive Power | Reserved | Trigger Dependent User Info |
|---|---|---|---|---|---|---|---|---|
| B0   B11 | B12   B19 | B20 | B21   B24 | B25 | B26   B31 | B32   B38 | B39 | |

Bits:   12   8   1   4   1   6   7   1   variable

**FIG. 12**

EP 4 422 288 A1

1300

AP 1302

Multi-AP TF — 1314

TF
STA 1306-RU1
STA 1308-RU2
STA 1310-RU3
STA 1312-RU4 — 1316

AP 1304

TF — 1318

STA 1306

$Rx_{pwr}^{AP1} + Rx_{pwr}^{AP2}$

TB PPDU (RU1) — 1320

STA 1308

$Rx_{pwr}^{AP1} + Rx_{pwr}^{AP2}$

TB PPDU (RU2) — 1322

STA 1310

TB PPDU (RU3) — 1324

STA 1312

TB PPDU (RU4) — 1326

FIG. 13

EP 4 422 288 A1

| L-STF | L-LTF | L-SIG | RL-SIG | U-SIG | SIG | STF | LTF | -LTF | DATA | PE |
|-------|-------|-------|--------|-------|-----|-----|-----|------|------|----|

1400

**1410**

TF
STA 1406 -RU1
STA 1408 -RU2
STA3 -RU3
STA4-RU4

**1412**

**1420-1**  **1420-2**

Multi-AP
TF

AP
1402

| L-STF | L-LTF | L-SIG | RL-SIG | U-SIG | SIG | STF | LTF | LTF | DATA | PE |
|-------|-------|-------|--------|-------|-----|-----|-----|-----|------|----|

**1414**

TF

**1422-1**  **1422-2**

AP
1404

**1416**

TB PPDU (RU1)

STA
1406

**1418**

TB PPDU (RU2)

STA
1408

FIG. 14

1500

| L-STF | L-LTF | L-SIG | RL-SIG | U-SIG | EHT-SIG | EHT-STF | EHT-LTF | -EHT-LTF | EHT-LTF | EHT-LTF | DATA | PE |
| L-STF | L-LTF | L-SIG | RL-SIG | U-SIG | EHT-SIG | EHT-STF | EHT-LTF | EHT-LTF | EHT-LTF | -EHT-LTF | DATA | PE |
| L-STF | L-LTF | L-SIG | RL-SIG | U-SIG | EHT-SIG | EHT-STF | EHT-LTF | EHT-LTF | EHT-LTF | -EHT-LTF | DATA | PE |
| L-STF | L-LTF | L-SIG | RL-SIG | U-SIG | EHT-SIG | EHT-STF | -EHT-LTF | EHT-LTF | EHT-LTF | EHT-LTF | DATA | PE |

1502  1504  1506  1508

FIG. 15

38

EP 4 422 288 A1

1600

**AP 1602**

TF 1614

Multi-AP TF 1626    TF 1628

**AP 1604**

TF 1620    TF 1630

**STA 1606**

TB PPDU 1616    TB PPDU 1632

**STA 1608**

TB PPDU 1618    TB PPDU 1634

**STA 1610**

TB PPDU 1622    TB PPDU 1636

**STA 1612**

TB PPDU 1624    TB PPDU 1638

FIG. 16

FIG. 17

| PHY Version Identifier | BW | UL/DL | BSS Color | TXOP | JTF | Other version dependent U-SIG fields |
|---|---|---|---|---|---|---|

☐ Version Independent subfields
▨ Version Dependent subfields

**FIG. 18**

| PHY Version Identifier | BW | UL/DL | BSS Color | TXOP | NSS | NLTF | Other UHR U-SIG fields |
|---|---|---|---|---|---|---|---|

☐ Version Independent subfields
▨ Version Dependent subfields

**FIG. 19**

**2000**

| Frame Control | Duration | RA | TA | Common Info | User Info | Padding | FCS |
|---|---|---|---|---|---|---|---|

Octets:  2  2  6  6  8 or more  variable  variable  4

B0  B11  B12  B19  B20  B21  B24  B25  B26  B31  B32  B38  B39

| AID12 | RU Allocation | UL FEC Coding Type | UL HE-MCS | UL DCM | SS Allocation/ RA-RU Information | UL Target Receive Power | PJTF | Trigger Dependent User Info |
|---|---|---|---|---|---|---|---|---|

Bits:  12  8  1  4  1  6  7  1  variable

**FIG. 20**

EP 4 422 288 A1

EP 4 422 288 A1

2100

| L-STF | L-LTF | L-SIG | RL-SIG | U-SIG | SIG | STF | LTF | DATA | PE |

**FIG. 21**

**FIG. 22**

EP 4 422 288 A1

EP 4 422 288 A1

Receive, from a first AP, a first PPDU comprising an indication of presence or absence of a second PPDU, overlapping the first PPDU, transmitted by a second AP

2302

Transmit, to the first AP, a third PPDU using a first transmit power determined based on the indication of presence or absence of the second PPDU

2304

**FIG. 23**

<u>2400</u>

Transmit, by a first AP, a first PPDU comprising an indication of presence or absence of a second PPDU, overlapping the first PPDU, transmitted by a second AP — 2402

Receive, by the first AP from a STA, a third PPDU transmitted with a transmit power based on the indication of presence or absence of the second PPDU — 2404

**FIG. 24**

EP 4 422 288 A1

FIG. 25

Europäisches
Patentamt

European
Patent Office

Office européen
des brevets

# EUROPEAN SEARCH REPORT

**Application Number**

EP 24 15 9984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/079992 A1 (PANASONIC IP CORP AMERICA [US]) 21 April 2022 (2022-04-21) <br> * paragraph [0099] - paragraph [0100] * <br> * paragraph [0097] * <br> & US 2023/422179 A1 (KANAYA HIROYUKI [JP] ET AL) 28 December 2023 (2023-12-28) <br> * paragraph [0129] * <br> * paragraph [0132] - paragraph [0133] * <br> ----- | 1-15 | INV. <br> H04W52/14 <br> H04L5/00 <br> H04W52/16 <br> H04W52/24 <br> H04W52/40 |

**TECHNICAL FIELDS SEARCHED (IPC)**

H04W
H04L
H04B

The present search report has been drawn up for all claims

| Place of search | Date of completion of the search | Examiner |
|---|---|---|
| The Hague | 2 July 2024 | Sklavos, Alexandros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 9984

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2024

| Patent document cited in search report | Publication date | Patent family member(s) | Publication date |
|---|---|---|---|
| WO 2022079992 A1 | 21-04-2022 | CN 116438884 A | 14-07-2023 |
| | | EP 4231749 A1 | 23-08-2023 |
| | | JP WO2022079992 A1 | 21-04-2022 |
| | | KR 20230087467 A | 16-06-2023 |
| | | US 2023422179 A1 | 28-12-2023 |
| | | WO 2022079992 A1 | 21-04-2022 |

**EP 4 422 288 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63448376